(19) **Europäisches Patentamt**
**European Patent Office**
**Office européen des brevets**

(11) **EP 3 604 415 B1**

(12) **EUROPÄISCHE PATENTSCHRIFT**

(45) Veröffentlichungstag und Bekanntmachung des Hinweises auf die Patenterteilung:
**03.05.2023   Patentblatt 2023/18**

(21) Anmeldenummer: **18772099.0**

(22) Anmeldetag: **17.05.2018**

(51) Internationale Patentklassifikation (IPC):
**C10G 1/10** (2006.01)    **C08J 11/14** (2006.01)
**C08J 11/20** (2006.01)

(52) Gemeinsame Patentklassifikation (CPC):
**C10G 1/10; C08J 11/14; C08J 11/20**

(86) Internationale Anmeldenummer:
**PCT/RU2018/000310**

(87) Internationale Veröffentlichungsnummer:
**WO 2018/174753 (27.09.2018 Gazette 2018/39)**

(54) **VERFAHREN ZUR VERARBEITUNG VON KAUTSCHUKHALTIGEN ABFÄLLEN**

METHOD FOR PROCESSING RUBBER-CONTAINING WASTE

PROCÉDÉ DE TRANSFORMATION DES DÉCHETS CONTENANT DU CAOUTCHOUC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2017   RU 2017109367**

(43) Veröffentlichungstag der Anmeldung:
**05.02.2020   Patentblatt 2020/06**

(73) Patentinhaber: **Susekov, Sergei Pavlovich
Vsevolozhsk, Leningradskaya obl. 188643 (RU)**

(72) Erfinder:
• **GRADOV, Aleksei Sergeevich
St. Petersburg 196603 (RU)**
• **SUSEKOV, Evgeny Sergeevich
St. Petersburg 195197 (RU)**
• **SUSEKOV, Sergei Pavlovich
St. Petersburg 195197 (RU)**

(74) Vertreter: **Spengler, Robert
Potthast & Spengler
Patentanwälte PartG mbB
Magirus-Deutz-Straße 12
89077 Ulm (DE)**

(56) Entgegenhaltungen:
**RU-C1- 2 076 501      RU-C1- 2 174 911
RU-C1- 2 291 168      RU-C2- 2 245 247
US-A- 4 839 151       US-A1- 2014 294 686**

EP 3 604 415 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Erfindungsgebiet

Die Erfindung betrifft die Technologie der Abfallverwertung und kann in der Gummiund chemischen Industrie, im Brennstoff- und Energie-Komplex sowie in der Wohnund Kommunalwirtschaft eingesetzt werden, um solche Ressourcen wie Brennstoffe und Rohstoffe aus Abfällen zu gewinnen.

Stand der Technik

Aus der RU 2 245 247 ist ein Verfahren zur Gewinnung von Kohlenwasserstoffen aus den Rückständen der Zersetzung von gummihaltigen Abfällen bekannt.

Die US 2014 0294686 A1 lehrt ein Verfahren zur Kühlung von Pyrolyseprodukten, deren Aufspaltung in feste und nicht-feste Bestandteile sowie zur Gewinnung von Kohlenwasserstoffen.

Bekannt ist ein Verfahren zur Verwertung von Gummiabfällen (RU 2076501).

Das Verfahren umfasst die thermische Zersetzung von Gummiabfällen im Arbeitsmedium. Das Arbeitsmedium besteht aus 98 bis 85 Gew.-% des auf 300 bis 1600°C überhitzten Wasserdampfs und aus 2 bis 15 Gew.-% Gas. Das Gas wurde nach der Abscheidung von Öl aus gasförmigen Abbauprodukten gewonnen. Außerdem werden die Gummiabfälle vor der thermischen Zersetzung mit 3 bis 40 Gew.-% Öl vorvermengt, indem gasförmige Abbauprodukte und das Arbeitsmedium durch die Schicht der Gummiabfälle bei deren Massenverhältnis (0,05 - 1,62) : 1 durchgeleitet werden. Feste Abbauprodukte werden mit 4 bis 40 Vol.-% Öl vermengt und mit gleichzeitigem Erhitzen auf 100 bis 500°C durch Gasfiltration zu Briketts gepresst. Das Gas wurde nach der Abscheidung von Öl aus gasförmigen Abbauprodukten gewonnen.

Das genannte Verfahren weist folgende Mängel auf:

1. Hoher spezifischer Energieverbrauch für das Verfahren zur Verwertung von Abfällen. Dies ist durch den Einsatz von Wasserdampf mit einer Temperatur von bis zu 1.600°C bedingt.

2. Hohe Emissionen von schädlichen Kraftstoff-Verbrennungsprodukten an die Umgebungsluft. Der Kraftstoff wird dabei für die Erzeugung sowie Erhitzung bis zu einer hohen Temperatur von Wasserdampf verbraucht.

3. Niedrige Qualität der zu gewinnenden Produkte der Verwertung. Dies ist dadurch bedingt, dass sich aus Öl (flüssigen Produkten) keine schwere Kohlenwasserstofffraktion abscheidet, die Schwefelverbindungen enthält und einen hohen Aschegehalt aufweist. Darüber hinaus werden feste Produkte (fester Rückstand), die Industrieruß enthalten, nicht behandelt. Diese werden als Kraftstoff in Form von Briketts verwendet.

Bekannt ist ein Verfahren zur Verwertung von Gummiabfällen (RU 2245247). Gemäß diesem Verfahren werden die Abfälle in folgenden Schritten verwertet:

- thermische Zersetzung im Ofen,
- Aufteilung der Abbauprodukte in feste und gasförmige Abbauprodukte,
- Abscheidung einer flüssigen Phase aus gasförmigen Abbauprodukten und
- Abführung von gasförmigen Abbauprodukten zur Verbrennung, um die Zersetzung aufrechtzuerhalten.

Außerdem werden die Gummiabfälle vor der thermischen Zersetzung mit 5 bis 15 Gew.-% Wasser vermengt. Danach werden sie nochmals mit Wasser vermengt, indem das Wasser in den Ofen in einer Menge von 50 bis 150% des Gewichts der Abfälle gesprüht wird. Feste Zersetzungsprodukte werden dabei mit einer Wassermenge von 10 bis 20% des Gewichts der Gummiabfälle berieselt. Als Wasser wird außerdem das Kondensat verwendet. Das Kondensat wird aus der flüssigen Phase durch Absonderung gewonnen.

Zu den Mängeln dieses Verfahrens gehören:

1. Hoher spezifischer Energieverbrauch. Dies ist auf das Erhitzen sowie die Verdampfung einer großen Wassermenge (bis zu 150% des Gewichts der Abfälle) im Zuge der Verwertung von Abfällen zurückzuführen.

2. Hohe schädliche Emissionen an die Umgebung. Diese werden bei der Verdampfung des mit den Kohlenwasserstoffen verunreinigten Kondensats gebildet. Das Kondensat wird in den Ofen gesprüht. Außerdem wird es für die Berieselung der bis zu einer hohen Temperatur (mind. 300°C) erwärmten festen Produkte eingesetzt.

3. Niedrige Qualität von flüssigen und festen Produkten der Verwertung von Gummiabfällen.

Dies ist dadurch bedingt, dass:

- aus flüssigen Produkten keine schwere Fraktion abgesondert wird, die schädliche Schwefelverbindungen (Thiole) enthält und
- feste Produkte keiner Trennung (Aufarbeitung) in kohlenstoffhaltige Produkte und Asche ausgesetzt werden.

Bekannt sind ferner ein Verfahren und eine Anlage zur Verwertung von gummihaltigen Abfällen (RU 2460743).

Die Verwertung von Gummiabfällen erfolgt mittels Thermolyse des Gummigranulats bei 350 bis 400°C in zirkulierendem überhitztem und verdampftem Benzin und bei einem Druck, der dem Atmosphärendruck (Normaldruck) nahezu gleich ist. Das Gummigranulat wird dabei in Industrieruß, Kunstöl sowie Kohlenwasserstoffgas zersetzt. Der sich bildende Industrieruß samt den adsorbierten Ölen wird mit Luft beblasen. Dabei wird der Textilkord vollständig verbrannt, und die Öle werden teilweise verbrannt und teilweise mit den Rauchgasen abgeführt.

Die Mängel dieses genannten Verfahrens sind:

1. Eine hohe Energieintensität des Verfahrens. Dies ist durch die Notwendigkeit bedingt, ein umlaufendes (zirkulierendes) Wärmeübertragungsmedium einzusetzen. Das umlaufende (zirkulierende) Wärmeübertragungsmedium muss von den Kohlenwasserstoff-Dämpfen getrennt werden, die infolge der thermischen Zersetzung von Gummi gebildet werden. Danach muss das Wärmeübertragungsmedium im Wärmetauscher erwärmt, verdampft und im Ofen überhitzt werden, bevor es dem Reaktor zugeführt wird.

2. Hohe schädliche Emissionen an die Umgebung. Diese werden bei der Verbrennung von adsorbierten Ölen und Textilkord gebildet. Dabei werden die Öle teilweise mit den Rauchgasen an die Umgebungsluft abgeführt.

3. Niedrige Qualität (Niedriger Reinheitsgrad) von Industrieruß aufgrund der Öl-Adsorption. Aus diesem Grund, um die Öle teilweise zu entfernen, wird der Industrieruß mit Luft beblasen. Infolgedessen wird die Rußoberfläche oxidiert, und die Qualität von Ruß wird beeinträchtigt. Dabei erfolgt eine unvollständige Extraktion (Entziehung) der flüssigen Fraktion (Öl) aus dem Gasstrom. Dadurch geht ein Teil von hochwertigen flüssigen Produkten verloren.

Als nächstliegend zur vorliegenden Erfindung werden das Verfahren zur Verwertung von gummihaltigen Abfällen und die Anlage zur Realisierung dieses Verfahrens angesehen (RU 2291168, veröffentlicht am 10.01.2007). Dieses Verfahren wurde als Prototyp gewählt.

Das Verfahren zur Verwertung von gummihaltigen Abfällen sowie einem Gemisch aus gummihaltigen und polymeren Abfällen umfasst folgende Schritte:

- eine Vorbehandlung,
- eine thermische Zersetzung im Ofen mit der Trennung der Abbauprodukte in ein Gas-Dampf-Gemisch und einen festen Rückstand,
- Abscheidung der flüssigen Phase aus dem Gas-Dampf-Gemisch mit der Bildung von kohlenwasserstoffhaltigem Gas und
- Abscheidung eines kohlenstoffhaltigen Produkts aus festem Rückstand.

Während der Vorbehandlungsphase werden dabei ganze und/oder zerkleinerte Abfälle bei dem anlaufenden ersten Verwertungskreislauf mit Erdgas gespült. Während des jeweiligen nachfolgenden Verwertungskreislaufs wird mit kohlenwasserstoffhaltigem Gas gespült und anschließend mit einem Kohlenwasserstofflösemittel imprägniert. Als Kohlenwasserstofflösemittel tritt hier eine flüssige Kohlenwasserstofffraktion auf. Es wird mit dieser innerhalb von mind. 15 Minuten imprägniert, wobei der Maximumsiedepunkt der flüssigen Kohlenwasserstofffraktion 220°C ist. Die Phase thermischer Zersetzung im Ofen wird im ersten Kreislauf im bis zu 400 - 500°C erwärmten Erdgas durchgeführt. Der jeweilige nachfolgende Verwertungskreislauf wird im bis zu 400 - 500°C erwärmten kohlenwasserstoffhaltigen Gas durchgeführt. Die Absonderung (Abscheidung) der flüssigen Phase aus dem Gas-Dampf-Gemisch wird in drei Stufen durchgeführt. Dabei wird das Gas-Dampf-Gemisch in der ersten Stufe bis auf 300 - 360°C mit der nachfolgenden Absonderung der schweren Kohlenwasserstofffraktion gekühlt. In der zweiten Stufe wird das Gas-Dampf-Gemisch bis auf eine Temperatur von max. 220°C mit der nachfolgenden Absonderung der Kohlenwasserstofffraktion gekühlt. Die Kohlenwasserstofffraktion wird teilweise zur Vorbehandlungsphase rezirkuliert, wo sie als Kohlenwasserstofflösemittel eingesetzt wird. In der dritten Stufe wird das Gas-Dampf-Gemisch bis auf eine Temperatur von unter 30°C mit einer nachfolgenden Absonderung der leichten Kohlenwasserstofffraktion gekühlt. Kohlenwasserstoffhaltiges Gas, das sich nach der Absonderung der flüssigen Phase aus dem Gas-Dampf-Gemisch gebildet hat, wird mindestens in vier Ströme aufgeteilt. Einer davon wird zur Verbrennung für die Erwärmung des zweiten Stroms von kohlenwasserstoffhaltigem Gas geleitet. Dieser zweite Strom wird dann dem Ofen zur Phase thermischer Zersetzung zugeführt. Der dritte Strom wird zur Spülung in der Vorbehandlungsphase eingesetzt. Der vierte Strom wird dem Abnehmer (Verbraucher) zugeleitet. Der feste Rückstand wird vor der Phase der Absonderung des kohlenstoffhaltigen Produkts mit Luft beblasen und gekühlt. Die sich nach der Spülung in der Vorbehandlungsphase und nach dem Beblasen vom festen Rückstand gebildeten Gase werden zur Verbrennung für die Erwärmung des zweiten Stroms von kohlenwasserstoffhaltigem Gas geleitet.

Zu den Mängeln dieses Verfahrens gehören:

1. Eine hohe Energieintensität des Verfahrens. Dies ist dadurch bedingt, dass

- die Verwertung in einem mehrstufigen Verfahren erfolgt,
- keine Kreislaufführung von thermischer Energie (Rückführung thermischer Energie in das Verwertungsverfahren) vorgesehen ist,
- ein zusätzliches Wärmeübertragungsmedium in Form von Erdgas eingesetzt werden muss sowie
- zwangsläufige Wärmeverluste, die während der Erwärmung des Wärmeübertragungsmediums im Wärmetauscher entstehen, Verdampfung und Überhitzung dessen vor der Zuführung dem Ofen nicht zu vermeiden sind.

2. Hohe schädliche Emissionen an die Umgebung. Diese entstehen, wenn der erwärmte feste Rückstand mit Luft beblasen wird. Infolgedessen werden der Kohlenstoff und die rückständigen Kohlenwasserstoffe unter Bildung von giftigen Verbrennungsprodukten oxidiert. Der Kohlenstoff und die rückständigen Kohlenwasserstoffe sind im festen Rückstand enthalten.

3. Niedrige Qualität des kohlenstoffhaltigen Produkts infolge der Teiloxidation beim Beblasen des festen Rückstands mit Luft. Dies führt dazu, dass der Aschegehalt im kohlenstoffhaltigen Produkt steigt und der Kohlenstoffgehalt sinkt.

Kurzfassung der Erfindung

Es ist die Aufgabe der Erfindung,

- den Energieaufwand für das Verwertungsverfahren zu reduzieren,
- hohe schädliche Emissionen an die Umgebung zu vermindern,
- die Qualität der aus Gummiabfällen zu gewinnenden Produkte zu erhöhen.

Die gestellte Aufgabe wird dadurch gelöst, dass das Verfahren zur Verwertung von gummihaltigen Abfällen umfasst:

- eine Vorbehandlung der gummihaltigen Abfälle,
- eine thermische Zersetzung im Ofen,
- eine Trennung der Abbauprodukte in ein Gas-Dampf-Gemisch und festen Rückstand,
- eine Absonderung (Abscheidung) der schweren Kohlenwasserstofffraktion aus dem Gas-Dampf-Gemisch.

Erfindungsgemäß werden die Abfälle bei der Vorbehandlung mit Wasserdampf beblasen. Die thermische Zersetzung wird in der versprühten schweren Kohlenwasserstofffraktion und im überhitzen Wasserdampf bei deren Massenverhältnis von (0,1 - 0,5) : 1 durchgeführt. Die Absonderung (Abscheidung) der schweren Kohlenwasserstofffraktion aus dem Gas-Dampf-Gemisch erfolgt mit Wasser. Es wird im Gemischstrom in einer Menge von 5 bis 15% vom Massenstrom (Massendurchsatz) des Gemisches gesprüht. Aus dem festen Rückstand wird durch Magnettrennung Metall abgeschieden. Danach wird durch dielektrische Trennung (Separation) ein zinkoxidhaltiges Produkt abgeschieden.

Durch Dampfeinblasen von Abfällen kann Luft aus diesen Abfällen entfernt werden. Wird dem Ofen die Luft zusammen mit den Abfällen zugeführt, kann dies eine Entzündung von Abfällen oder eine Explosion bei der Vermengung der Luft mit den im Ofen erhitzten Gasen der thermischen Zersetzung verursachen. Dabei wird der Wasserdampf teilweise auf der kalten Oberfläche der Abfälle während des Einblasens kondensiert. Dadurch wird die Erwärmung der Abfälle wesentlich intensiviert. Dies ist dadurch bedingt, dass bei der Wasserdampfkondensation eine hohe Intensität der Wärmeübertragung erreicht wird. Es ist bekannt (s. Wärmetauscher-Handbuch: In zwei Bänden. Band 1/ Aus dem Englischen unter der Redaktion von B.S. Petuchow, W.K. Schikow. - M.: Energoatomisdat, 1987, S. 77. Tab. 2), dass bei der Wasserdampfkondensation der Wärmeübergangskoeffizient 2.000 bis 50.000 W/m2/°C erreicht. Wenn die Abfälle mit einem gasförmigen Wärmeübertragungsmedium (mit Erdgas oder gasförmigen Kohlenwasserstoffen) gespült werden, entsteht eine erzwungene Konvektion. Dabei übersteigt der Wärmeübergangskoeffizient nicht 200 W/m$^2$/ °C.

Somit wird mit einer Vorbehandlung der Abfälle vor der Zuführung in den Ofen, und zwar mit Dampfeinblasen, eine hohe Erwärmungsgeschwindigkeit der Abfälle bis auf 100°C sichergestellt (d. h. eine um das 10- bis 25-fache höhere Erwärmungsgeschwindigkeit als bei der Spülung mit einem gasförmigen Wärmeübertragungsmedium ohne Kondensation). Infolgedessen werden die Wärmeverluste reduziert, die mit der Erwärmung der Abfälle verbunden sind. Dies bedeutet eine Reduzierung des Energieaufwands für die Verwertung der Gummiabfälle.

Bei der Wasserdampfkondensation werden auf der Oberfläche der Abfälle ca. $r_K$ = 2.500 kJ/kg Kondensationswärme abgegeben. Diese wird für die Erwärmung der Abfälle verbraucht. Dadurch vermindert sich der Verbrauch des Wärmeübertragungsmediums (Wasserdampf) für die Erwärmung der Abfälle wesentlich.

Im Vergleich zur Spülung mit Erdgas oder mit gasförmigen Kohlenwasserstoffen wird somit durch das vorhergehende Dampfeinblasen der Abfälle der Effekt der Luftverdrängung aus den Abfällen sowie die intensitätsstarke Erwärmung der Abfälle vor der Zuführung zum Ofen für die thermische Zersetzung sichergestellt. Dadurch wird der Effekt der Reduzierung des Energieaufwands für das Gummiabfälle-Verwertungsverfahren erreicht.

Die thermische Zersetzung der Gummiabfälle im Ofen in der versprühten schweren Kohlenwasserstofffraktion und im überhitzen Wasserdampf bei deren Massenverhältnis von (0,01 - 0,5) : 1 stellt eine hohe Erwärmungsgeschwindigkeit der Abfälle sicher. Außerdem wird die Reduzierung der Bildung von schädlichen Verbindungen im Zuge der thermischen Zersetzung aufgrund des Vorhandenseins von Wasserdampf gewährleistet. Der Wasserdampf vermeidet die Bildung von persistenten organischen Schadstoffen.

Eben das Vorhandensein von versprühten schweren Kohlenwasserstoffen im Wasserdampf-Medium (Tropfen von flüssigen Kohlenwasserstoffen mit einem Minimumsiedepunkt von 300°C) führt zu einer Steigerung der Dichte eines solchen Mediums und demzufolge der Wärmeübertragung von diesem Medium zu den Gummiabfällen.

Die Reduzierung des Massenverhältnisses der schweren Kohlenwasserstofffraktion und des Wasserdampfes auf unter 0,1 : 1 (kg/kg) verursacht eine starke Verringerung der Wärmeübertragung von diesem Medium zu den Abfällen. In diesem Fall ist die Intensität der Wärmeübertragung praktisch der Intensität der Wärmeübertragung zu den Abfällen vom reinen (ohne Gehalt von Tropfen der Kohlenwasserstoffe) Wasserdampf gleich. Die Verminderung der Intensität der Wärmeübertragung im Ofen führt wiederum die Erhöhung der erforderlichen Erwärmungszeit der Abfälle herbei. Dadurch steigen die Wärmeverluste und somit der Energieaufwand für das Gummiabfälle-Verwertungsverfahren.

Die Verwendung der schweren Kohlenwasserstofffraktion als zu versprühendes Medium ermöglicht es, ein solches Medium bereitzustellen, das Tropfen der Kohlenwasserstoffe enthält und nicht ihre Dämpfe. Dies wird dadurch erreicht, dass der Minimumsiedepunkt der schweren Fraktion 300°C ist. Deshalb verdampft sie langsam im Ofen. Die Anwendung der leichten Fraktion (Siedepunkt unter 300°C) wird in diesem Fall zu einer schnellen Verdampfung der Tropfen von Kohlenwasserstoffen sowie einer starken Verminderung der Intensität der Wärmeübertragung zu den Abfällen führen.

Die Steigerung des Massenverhältnisses der schweren Kohlenwasserstofffraktion und des Wasserdampfes auf über 0,5 : 1 führt zu einer starken Zunahme des Verbrauchs an schwerer Fraktion sowie zu einer Instabilität des Gemisches "Tropfen schwerer Fraktion und Wasserdampf" wegen eines unvermeidlichen Zusammenflusses der Tropfen und der Strahlenbildung. Dadurch wird die spezifische Oberfläche der gesamten Tropfen im Wasserdampf-Medium und demzufolge die Intensität der Wärmeübertragung zu den Abfällen verringert.

Somit wird durch thermische Zersetzung in der versprühten schweren Kohlenwasserstofffraktion und im überhitzten Wasserdampf bei deren Massenverhältnis von (0,1 - 0,5) :1 Folgendes sichergestellt:

- eine hohe Intensität der Wärmeübertragung zu den Gummiabfällen,
- ein niedriger Verbrauch an schwerer Fraktion.

Als Ergebnis führt dies zur Reduzierung des Energieaufwands für das Verwertungsverfahren. Dies erfolgt aufgrund der Reduzierung der Wärmeverluste bei der thermischen Zersetzung der Abfälle infolge der Verminderung der Verweilzeit der Abfälle im Ofen.

Es sei erwähnt, dass bei der Absonderung (Abscheidung) der schweren Fraktion aus dem Gas-Dampf-Gemisch auch Teilchen vom Kohlenstoff-Feinstaub abgesetzt werden, die aus dem Ofen mit dem Gas-Dampf-Gemischstrom zwangsläufig ausgetragen werden. Eben diese Staubteilchen, wenn sie sich auf den Oberflächen der Rohrleitungen und in den Kondensationssystemen absetzen, führen zu Verstopfungen der Rohrleitungen und einer starken Reduzierung des Wärmeaustausches in den Kondensationssystemen. Demzufolge kommt es zu Ausfällen der Anlage. Deshalb müssen diese Teilchen (Kohlenstoff-Feinstaub) gleich am Austritt aus dem Ofen aus dem Gas-Dampf-Gemisch abgesondert werden. Dies wird dadurch sichergestellt, dass die Absonderung (Abscheidung) der schweren Fraktion aus dem Gas-Dampf-Gemisch mit Wasser erfolgt. Es wird im Gemischstrom in einer Menge von 5 bis 15% vom Massenstrom (Massendurchsatz) des Gemisches gesprüht. Die Zuführung der Wassertropfen zum Gas-Dampf-Gemischstrom am Ofenaustritt löst eine scharfe Kühlung des Gemisches und die Kondensation eines Teils von Kohlenwasserstoffen in Form von Tropfen schwerer flüssiger Fraktion aus. Außerdem setzt sich an den sich bildenden Tropfen flüssiger Kohlenwasserstoffe Kohlenstoff-Feinstaub ab, der aus dem Ofen ausgetragen wird.

Die Verwendung von Wasser zur Ausscheidung des Kohlenstoff-Feinstaubs und die Kondensation der schweren Kohlenwasserstofffraktion in einer Menge von weniger als 5% vom Massenstrom (Massendurchsatz) des Gemisches stellen keine Kühlung des Gemisches mit der Absonderung der schweren Fraktion sowie keine Ausscheidung des Kohlenstoff-Feinstaubs sicher. Um den Effekt der Absonderung der schweren Fraktion und der Ausscheidung des Kohlenstoff-Feinstaubs zu erreichen, muss Wasser in den Gemischstrom in einer Menge von mindestens 5% vom Massenstrom (Massendurchsatz) des Gemisches gesprüht werden.

Das Versprühen von Wasser im Gas-Dampf-Gemischstrom in einer Menge von über 15% vom Massenstrom (Massendurchsatz) des Gemisches führt zu einer scharfen Kühlung des Gemisches. Infolgedessen werden nicht nur die schwere Fraktion sondern auch leichte Kohlenwasserstoffe mit der Bildung einer großen Flüssigkeitsmenge verflüssigt (kondensiert). Die Flüssigkeit enthält Wasser und flüssige Kohlenwasserstoffe. Dabei findet keine vollständige Wasserverdampfung statt. Als Ergebnis weisen die sich bildenden flüssigen Kohlenwasserstoffe eine große Menge Wasser auf. Dadurch entsteht die Notwendigkeit nach zusätzlichen Trennverfahren (Trennprozessen) der sich bildenden Flüssigkeit. Dabei nimmt ebenfalls die Qualität der zu gewinnenden flüssigen Produkte wegen des erhöhten Wassergehaltes ab.

Somit führt die Versprühung von Wasser in einer Menge von 5 bis 15% vom Massenstrom (Massendurchsatz) des Gemisches im Gas-Dampf-Gemischstrom eine vollständige Wasserverdampfung mit Wasserdampfbildung herbei. Dabei wird gewährleistet, dass sich Nebel aus kleinen Tropfen der schweren Fraktion bildet. Dieser Nebel absorbiert (nimmt) den Kohlenstoff-Feinstaub aus dem Gas-Dampf-Gemisch (auf). Die Absonderung (Abscheidung) der schweren Kohlenwasserstofffraktion aus dem Gas-Dampf-Gemisch ermöglicht, die Wertzahl von den rückständigen Kohlenwasserstoffen des Gas-Dampf-Gemisches zu verbessern. Dies kommt dadurch zustande, dass sich mit der schweren Fraktion Schwefelverbindungen absetzen und Kohlenstoff-Feinstaub entzogen wird.

Zum Sprühen wird Wasser verwendet, das aus flüssigen Produkten abgesondert wird. Die flüssigen Produkte bilden sich nach der Kühlung des Gas-Dampf-Gemisches und der Kondensation von Kohlenwasserstoffen.

Um im Ofen ein Medium bereitzustellen, in dem eine thermische Zersetzung der Abfälle durchgeführt werden kann, wird die schwere Kohlenwasserstofffraktion eingesetzt. Dies ermöglicht eine zusätzliche thermische Zersetzung von Kohlenwasserstoffen schwerer Fraktion mit der Abnahme von deren Molekülmasse. Somit erhöht sich die Wertzahl der Qualität von flüssigen Produkten thermischer Zersetzung der Gummiabfälle.

Der feste Rückstand der thermischen Zersetzung der Gummiabfälle enthält Industrieruß, Drahtlitze und verschiedene Metalloxide, die in die Rohgummimasse bei der Herstellung von technischen Gummiwaren eingeführt wurden. Aus diesem Grund kann der feste Rückstand ohne Vorbehandlung weder zur Fertigung neuer technischer Gummiwaren noch etwa als fester Kraftstoff eingesetzt werden, weil er eine große Menge (bis zu 15 Gew.-%) verschiedener Oxide enthält, darunter auch Schwermetall-Oxide. Da der feste Rückstand eine große Menge (mindestens 5 Gew.-% je nach dem Typ der Abfälle) Zinkoxid enthält, wobei darin auch Drahtlitze vorkommen kann (z. B. bei der Verwertung von Altreifen), muss der feste Rückstand einer Behandlung zwecks Abscheidung von Metall sowie von einem Produkt ausgesetzt werden, das ein wertvolles Material aufweist, und zwar Zinkoxid. Dies wird zuerst anhand einer Magnettrennung und Metallabscheidung zustande gebracht. Danach wird durch eine dielektrische Trennung (Separation) ein zinkoxidhaltiges Produkt abgeschieden. Nach der Magnet- und dielektrischen Trennung des festen Rückstands wird ein dem Industrieruß analoger Stoff, ein Metall und ein zinkhaltiges

Produkt gewonnen. Letzteres weist Zink in einer Menge von mindestens 35 bis 40 Gew.-% auf.

Auf diese Weise wird die Qualität der festen Zersetzungsprodukte der Gummiabfälle verbessert, und ein hochwertiger Rohstoff zur Gewinnung von Zinkoxid und dessen Rückführung in die Produktion von technischen Gummiwaren wird hergestellt.

Kurzbeschreibung der Zeichnungen

In der Figur ist das Schema der Vorrichtung (Anlage) zur Durchführung des Verfahrens zur Verwertung von gummihaltigen Abfällen dargestellt.

Die Vorrichtung umfasst:
einen Speicher 1, der an einen Bunker 2 angeschlossen ist; Verschlüsse 3 und 4 für die Zufuhr von zerkleinerten Abfällen 5; einen Bunker 6, der mit einem Dampferzeuger 7 mittels Pumpe 8 verbunden ist; einen Temperatursensor 9; einen Brenner 10, der an einen Behälter 11 mittels eines Hahns 12 angeschlossen ist; eine Mantelheizung 13; einen Saugzug 14; einen Schornstein 15; einen Ofen 16; einen Motor 17, der an eine Schnecke 18 angeschlossen ist; eine Entleerungsvorrichtung (einen Kanal) 19; einen Behälter 20, der an eine Regelpumpe (Verstellpumpe) 21 mit einem Durchflussmesser 22 angeschlossen ist; eine Einspritzdüse 23, die an eine Regelpumpe 24 mit einem Durchflussmesser 25 angeschlossen ist; einen Temperatursensor 26; einen Hahn 27 mit einem Durchflussmesser 28; einen Gaswäscher 29; einen Sumpf 30, der anhand einer Pumpe 31 und einem Durchflussmesser 32 an eine Einspritzdüse 33 angeschlossen ist; einen Temperatursensor 34; einen Kondensator 35, der an einen Kühlturm 36 angeschlossen ist; einen Temperatursensor 37; einen Hahn 38, der an einen Behälter 39 angeschlossen ist; einen Durchflussmesser 40, der an ein Filter 41 angeschlossen ist; eine Regelpumpe 42; eine Regelpumpe 43, die an einen Durchflussmesser 44 angeschlossen ist; eine Schleusen-Aufgabevorrichtung (einen Schleusenspeiser) 45, die (der) an eine Kühlvorrichtung 46 mit einer Mantelkühlung 47 angeschlossen ist; einen Motor 48, der mit einer Schnecke 49 verbunden ist; einen Temperatursensor 50; einen Magnetscheider 51, der an einen Speicher 52 und einen dielektrischen Abscheider 53 angeschlossen ist; einen Speicher 54 und einen Speicher 55.

Gemäß der Erfindung erfolgt die Verwertung von gummihaltigen Abfällen wie folgt:
Aus dem Speicher 1 werden dem Bunker 2 bei geschlossenen Verschlüssen 3 und 4 zerkleinerte Gummiabfälle 5 in Form von Chips zugeführt. Nachdem der Bunker 2 gefüllt ist, wird der Verschluss 3 geöffnet. Die Abfälle aus dem Bunker 1 werden nach unten in den Bunker 6 geschüttet und bleiben auf dem Verschluss 4 liegen. Danach wird der Verschluss 3 geschlossen. Wasserdampf wird vom Dampferzeuger 7 mit der eine einstellbare Durchflussmenge aufweisenden Pumpe 8 dem Bunker 6 zugeführt. Der Wasserdampf wird durch eine Schicht von zerkleinerten Abfällen filtriert. Während der Filtration wird der Wasserdampf gekühlt und teilweise verflüssigt (kondensiert). Die Gummiabfälle werden durch die Kondensationswärme vom Wasserdampf erwärmt. Dabei wird die Erwärmungstemperatur der Abfälle nach Angaben des Temperatursensors 9 kontrolliert. Der Wasserdampf wird dem Bunker 6 solange zugeführt, bis die Abfälle bis zu der $T_{Erw}$ = 100°C erwärmt sind.

Ein Teil des Wasserdampfs, der dem Bunker 6 zugeführt wird, wird vollständig kondensiert. Infolge der Abgabe der Kondensationswärme und einer intensitätsstarken Erwärmung werden die Abfälle schnell (innerhalb von ca. 3 bis 5 Minuten, je nach der Abfallmenge im Bunker 6) bis auf die Kondensationstemperatur von 100°C durchwärmt. Danach kommt der Kondensationsprozess zum Stillstand. Ab diesem Zeitpunkt erreicht der Wasserdampfdruck im Bunker 6 eine Größe, die dem Atmosphärendruck (Normaldruck) entspricht. Dabei ist die Luft durch den Wasserdampf aus der Schicht der zerkleinerten Abfälle aus dem Bunker 6 in den Brenner 10 verdrängt.

Gleichzeitig mit dem Luft- und Wasserdampfeintritt wird der Kraftstoff dem Brenner 10 aus dem Behälter 11 über den Hahn 12 mit einem vorgegebenen Durchsatz zugeführt und verbrannt. Die sich bildenden Verbrennungsprodukte kommen aus dem Brenner 10 bei einer hohen Temperatur (ca. 1.000°C) in die Mantelheizung 13, strömen durch die Mantelheizung 13 und treten in den Dampferzeuger 7 aus. Hier werden die Verbrennungsprodukte gekühlt. Ihre Wärme wird zur Erzeugung von Wasserdampf verbraucht. Danach werden die Verbrennungsprodukte aus dem Dampferzeuger 7 mittels des Saugzugs 14 in den Schornstein 15 abgeführt. Die Verbrennungsprodukte sind dabei bis auf eine Temperatur von max. 150°C gekühlt. Dies ermöglicht es, die Wärme der aus der Mantelheizung 13 abzuführenden Verbrennungsprodukte nützlich zu verwenden. Auf diese Weise kann der Energieverbrauch für das Verfahren zur Verwertung von Abfällen reduziert werden.

Zum Zeitpunkt, wenn die Temperatur der Gummiabfälle im Bunker 6 eine Temperatur $T_{Erw}$ = 100°C erreicht, wird die Wasserdampfzuführung vom Dampferzeuger 7 zum Bunker 6 eingestellt. Die Temperatur $T_{Erw}$ wird anhand der Angaben des Temperatursensors 9 kontrolliert. Danach wird der Verschluss 4 geöffnet. Die Abfälle werden unter dem Einfluss ihres eigenen Gewichts aus dem Bunker 6 in den Ofen 16 geschüttet. Danach wird der Verschluss 4 geschlossen. Gleichzeitig mit dem Schlie-ßen des Verschlusses 4 wird die Schnecke 18 mit dem Motor 17 in Drehung versetzt. Die Schnecke 18 beginnt, die Abfälle von der Beschickung zur Entleerungsvorrichtung (zum Kanal) 19 zu transportieren.

Gleichzeitig mit der Zuführung der Gummiabfälle in den Ofen 16, d. h. mit der Entladung der Abfälle aus dem Bunker 6, wird aus dem Behälter 20 mit der schweren Kohlenwasserstofffraktion mittels der Regelpumpe 21 die schwere Kohlenwasserstofffraktion in die Einspritzdüse 23 geleitet. Die Zuführung erfolgt über den Durchflussmesser 22 mit einer vorgegebenen Durchflussmenge.

Beim Anlaufen der Anlage, solange die schwere Kohlenwasserstofffraktion noch nicht produziert wurde, wird der Behälter 20 mit Masut gefüllt. Masut wird als schwere Kohlenwasserstofffraktion eingesetzt, denn die chemisch-physikalischen Parameter der schweren Fraktion thermischer Zersetzung von gummihaltigen Abfällen sind den gleichen Parametern von Masut ähnlich.

Der Wasserdampf wird vom Dampferzeuger 7 mit der Regelpumpe 24 der Einspritzdüse 23 zugeführt. Die Zuführung erfolgt über den Durchflussmesser 25 mit einer vorgegebenen Durchflussmenge. Durch die Regelung des Durchflusses von Wasserdampf und der schweren Kohlenwasserstofffraktion wird das Massenverhältnis schwere Fraktion zu Wasserdampf im Bereich von (0,1 - 0,5) : 1 festgelegt. Die schwere Fraktion und der Wasserdampf werden der Einspritzdüse 23 zugeführt.

In der Einspritzdüse 23 wird die schwere Kohlenwasserstofffraktion unter der Wirkung des Wasserdampfstroms mit einer Tropfengröße von 0,1 bis 0,5 mm versprüht. Als Ergebnis bildet sich im Ofen 16 ein Zweiphasenmedium (Wasserdampf und Tropfen schwerer Kohlenwasserstofffraktion). Die Gummiabfälle, die aus dem Bunker 6 beschickt werden, gelangen in dieses Medium.

Das sich bildende Zweiphasenmedium überträgt die Wärme von der Mantelheizung 13 zu der Oberfläche der Gummiabfälle mittels Konvektion. Wegen der vorhandenen Tropfen der schweren Fraktion weist dieses Medium eine größere Dichte auf als die vom Wasserdampf. Dies ist dadurch bedingt, dass die Dichte der schweren Kohlenwasserstofffraktion 950 bis 1.000 kg/m³ beträgt. Dabei übersteigt die Dichte des Wasserdampfs im Ofen nicht 1 kg/m³. Da das Zweiphasenmedium eine größere Dichte als der reine Wasserdampf aufweist, überträgt dieses Medium die Wärme mit einer höheren Intensität. Infolgedessen wird die Erwärmungszeit der Abfälle reduziert.

Durch die Zuführung des Wasserdampfs und der versprühten schweren Kohlenwasserstofffraktion in die Beschickungszone für die Abfälle wird eine große Temperaturdifferenz zwischen dem Wasserdampf mit den Tropfen schwerer Fraktion (die Temperatur beträgt ca. 300°C) und den kalten Abfällen mit einer Temperatur von ca. 30 bis 40°C sichergestellt. Dies (d. h. die große Temperaturdifferenz) sorgt für hohe Wärmeströme zu den Abfällen mittels einer Konvektionsübertragung thermischer Energie. Infolgedessen werden die Erwärmung der Abfälle beschleunigt und die Verwertungszeit reduziert.

Die Verbrennungsprodukte strömen durch die Mantelheizung 13. Die Gummiabfälle werden mit der Schnecke 18 befördert und sowohl aufgrund des Wärmeaustausches mit der Mantelheizung 13 selbst als auch durch den Konvektions-Wärmeaustausch mit der schweren Kohlenwasserstofffraktion erwärmt. Die schwere Kohlenwasserstofffraktion ist im Wasserdampf-Medium versprüht. Die Tropfen der erwärmten schweren Kohlenwasserstofffraktion fallen an der Oberfläche der Gummiabfälle aus und erwärmen diese intensiv. Außerdem wird die Oberflächenschicht der Abfälle durch die Tropfen der schweren Kohlenwasserstofffraktion aufgelöst. Dies führt zur Beschleunigung der thermischen Zersetzung des Gummis, d. h. zur Reduzierung der Verwertungszeit und demzufolge zur Reduzierung des Energieaufwands für das Verwertungsverfahren.

Bei der Erwärmung der Gummiabfälle im Ofen 16 bis zu einer Temperatur von 300 bis 500°C beginnt die Thermolyse der Gummiabfälle. Sie verläuft mit der Freisetzung von gasförmigen Produkten und festem Rückstand. Die Temperatur im Ofen 16 wird dabei nach den Angaben des Temperatursensors 26 kontrolliert und durch Änderung der Kraftstoffmenge geregelt, die im Brenner 10 verbrannt wird.

Gasförmige Abbauprodukte der Abfälle vermischen sich mit dem Wasserdampf und der versprühten schweren Kohlenwasserstofffraktion. Infolgedessen bildet sich im Ofen 16 ein Zweiphasengemisch. Der Druck im Reaktor steigt und wird höher als der Atmosphärendruck.

Bei der Erwärmung im Ofen 16 erfolgen auch eine teilweise Verdampfung sowie eine thermische Zersetzung der schweren Kohlenwasserstofffraktion mit der Bildung von Kohlenwasserstoffen mit einer niedrigeren Molekülmasse (wertvolle leichte Kohlenwasserstoffe) und Ruß. Somit erhöht sich die Qualität von Produkten der Verwertung gummihaltiger Abfälle.

Die sich bildenden gasförmigen Abbauprodukte der Abfälle, vermengt mit dem Wasserdampf, Ruß und den Produkten thermischer Zersetzung der schweren Fraktion in Form eines Gas-Dampf-Gemisches, werden aus dem Ofen 16 dem Gaswäscher 29 zugeführt. Die Zuführung erfolgt über den Durchflussmesser 28. Der Durchfluss wird mit dem Hahn 27 geregelt.

Gleichzeitig wird Wasser aus dem Sumpf 30 mit der Regelpumpe 31 über den Durchflussmesser 32 der Einspritzdüse 33 zugeführt. Dieses Wasser hat sich im Sumpf 30 infolge der Abtrennung (Abschichtung) des Kondensates gebildet.

Der Durchfluss des Gas-Dampf-Gemisches wird mit dem Hahn 27 geregelt. Die Wasserdurchflussmenge wird mit der Pumpe 31 geregelt. Somit wird die Durchflussmenge von Wasser, das mittels der Einspritzdüse 33 in den Gas-Dampf-Gemischstrom gesprüht wird, im Bereich von 5 bis 15% vom Massenstrom (Massendurchsatz) des Gemisches festgelegt.

Infolge des Wärmeaustausches des Gas-Dampf-Gemisches mit den Wassertropfen erfolgen im Gaswäscher 29 die Erwärmung und die Verdampfung der Wassertropfen. Das Gemisch wird gekühlt. Infolge der Kühlung des Gemisches kommt die Kondensation hochmolekularer Kohlenwasserstoffe mit der Absonderung (Abscheidung) der schweren Fraktion zustande. Diese Kondensation verläuft nicht auf der Oberfläche, sondern im Volumen. Aus diesem Grund werden die Dämpfe hochmolekularer Kohlenwasserstoffe mit der Bildung von Tropfen kondensiert. An diesen Tropfen setzt sich Kohlenstoff-Feinstaub (Ruß) ab, der aus dem Ofen 16 ausgetragen wird. Die Tropfen fallen im Gaswäscher mit der Bildung von flüssiger Phase aus. Die flüssige Phase wird aus dem Gaswäscher 29 in den Behälter 20 abgeleitet. Das versprühte Wasser verdampft vollständig mit der Bildung von Wasserdampf. Die Abkühltemperatur des Gas-Dampf-Gemisches im Gaswäscher 29 wird dabei nach den Angaben des Temperatursensors 34 kontrolliert und durch Änderung der Durchflussmenge des Sprühwassers geregelt.

Das von der schweren Kohlenwasserstofffraktion und dem Kohlenstoff-Feinstaub gereinigte Gas-Dampf-Gemisch wird aus dem Gaswäscher 29 in den Kondensator 35 abgeführt. Im Kondensator 35 wird dieses Gemisch gekühlt. Dies erfolgt dadurch, dass das Wasser vom Kühlturm 36 durch das Kondensatorgehäuse gepumpt wird. Die Temperatur im Kondensator wird dabei anhand der Angaben des Temperatursensors 37 kontrolliert.

Durch die Abkühlung im Kondensator 35 wird ein Teil des Gas-Dampf-Gemisches mit der Bildung des Kondensats verflüssigt. Das Kondensat enthält dabei Wasser und flüssige Kohlenwasserstoffe. Ein Teil des Gas-Dampf-Gemisches wird nicht kondensiert. Das Kondensat aus dem Kondensator 35 wird in den Sumpf 30 abgelassen. Im Sumpf 30 werden Wasser und flüssige Kohlenwasserstoffe getrennt. Da das Wasser eine größere Dichte aufweist, sammelt es sich im unteren Teil des Sumpfes 30 an. Die flüssigen Kohlenwasserstoffe sammeln sich im oberen Teil des Sumpfes an. Die flüssigen Kohlenwasserstoffe aus dem Sumpf 30 werden über den Hahn 38 in den Sammelbehälter 39 abgelassen. Aus dem Sumpf 30 wird ein Teil des Wassers, der der Wasserdampfdurchflussmenge entspricht, über den Durchflussmesser 40 dem Filter 41 zugeführt. Im Filter 41 wird das Wasser von organischen Verbindungen (Kohlenwasserstoffen) gereinigt. Danach wird das Wasser dem Dampferzeuger 7 zur Erzeugung von Wasserdampf zugeführt. Der Wasserumlauf im geschlossenen Kreislauf ermöglicht es, die Emission von Wasser an die Umgebung auszuschließen. Dadurch können die ökologischen Parameter des Verwertungsverfahrens verbessert werden, d. h. schädliche Emissionen an die Umgebung werden vermindert.

Die nicht kondensierenden Kohlenwasserstoffe aus dem Kondensator 35 werden mit der Regelpumpe 42 dem Brenner 10 zugeführt und verbrannt. Dabei wird der Verbrauch von Kraftstoff reduziert, der dem Brenner 10 aus dem Behälter 11 zugeführt wird. Die Verbrennung der nicht kondensierenden Kohlenwasserstoffe ermöglicht es, die Emission von diesen an die Umgebung zu vermeiden. Auf diese Weise wird der Verbrauch von zusätzlichem Kraftstoff für das Verfahren zur Verwertung gummihaltiger Abfälle reduziert.

Die flüssigen Kohlenwasserstoffe aus dem Sammelbehälter 39 werden anhand der Regelpumpe 43 über den Durchflussmesser 44 mit einem vorgegebenen Durchfluss dem Brenner 10 zugeführt und verbrannt. Dabei wird der Kraftstoffverbrauch aus dem Behälter 11 eingestellt.

Durch die Verwendung der flüssigen Kohlenwasserstoffe als Kraftstoff kann der Verbrauch von zusätzlichem Kraftstoff ausgeschlossen werden. Die flüssigen Kohlenwasserstoffe werden bei der Verwertung der Abfälle gewonnen.

Der feste Rückstand aus dem Ofen 16 wird durch die Entleerungsvorrichtung (den Kanal) 19 mit Hilfe der Schleusen-Aufgabevorrichtung (des Schleusenspeisers) 45 in die Kühlvorrichtung 46 abgeführt. Das Kühlwasser wird vom Kühlturm 46 durch die Mantelkühlung 47 der Kühlvorrichtung 46 gepumpt. Der Motor 48 wird angelassen, und die Schnecke 49 wird in Drehung versetzt. Die Schnecke 49 befördert den festen Rückstand von der Beschickung zur Entleerungsvorrichtung (zum Kanal) 19. Bei der Bewegung durch die Kühlvorrichtung wird der feste Kohlenstoffrückstand bis auf eine Temperatur von max. 100°C gekühlt. Die Temperatur wird mit den Angaben des Temperatursensors 50 kontrolliert. Der gekühlte Rückstand aus der Kühlvorrichtung 46 wird in den Magnetscheider 51 entladen. Im Magnetscheider wird aus dem festen Rückstand Metall abgeschieden. Aus dem Magnetscheider wird Metall in den Speicher 52 entladen. Der vom Metall gereinigte feste Rückstand wird dem dielektrischen Abscheider 53 zugeführt. Im dielektrischen Abscheider werden aus dem festen Rückstand Nichtleiter (Oxide) abgeschieden, darunter Zinkoxid. Aus dem dielektrischen Abscheider wird Zinkoxid, gemischt mit anderen Oxiden (Silicium-, Calcium-, Titanoxiden usw.), in den Speicher 54 entladen. Der Zinkoxid-Gehalt in diesem Gemisch erreicht 30 bis 40%, je nach dem Typ der gummihaltigen Abfälle. Deshalb stellt dieses Gemisch einen hochwertigen Rohstoff zur Gewinnung von Zinkoxid dar.

Der gereinigte feste Rückstand wird aus dem dielektrischen Abscheider 53 in den Speicher 55 entladen. Infolge der Abscheidung aus dem festen Rückstand des Metalls sowie der Metalloxide erhöht sich der Gehalt an Kohlenstoffen im festen Rückstand. Aus diesem Grund stellt der auf solche Weise behandelte feste Rückstand einen dem Industrieruß analogen Stoff dar. Somit werden infolge der konsequenten Magnet- und dielektrischen Trennung von festem Rückstand Qualitäts-Industrieruß und ein hochwertiger Rohstoff zur Gewinnung von Zinkoxid hergestellt.

Ausführungsbeispiele des Verfahrens

Die Erfindung wird anhand von folgenden Beispielen erläutert.

Beispiel 1

Aus dem Speicher 1 werden dem Bunker 2 bei geschlossenen Verschlüssen 3 und 4 zerkleinerte Gummiabfälle 5 in Form von Chips zugeführt. Diese weisen die Maße von 50 mm x 30 mm x 50 mm und eine Schüttdichte von 500 kg/m$^3$ auf. Bei der Beschickung des Bunkers 2 mit einem Volumen von 1 m$^3$ wird die Menge von Chips 500 kg betragen. Nachdem der Bunker 2 gefüllt ist, wird der Verschluss 3 geöffnet. Die Abfälle aus dem Bunker 1 werden nach unten in den Bunker 6 geschüttet und bleiben auf dem Verschluss 4 liegen. Danach wird der Verschluss 3 geschlossen. Der Wasserdampf wird mit einem Durchsatz von 600 kg/h und einer Temperatur von 110°C vom Dampferzeuger 7 mittels der Regelpumpe 8 dem Bunker 6 zugeführt. Wenn der Wasserdampf auf die große kalte Oberfläche (die Temperatur der Chips ist 20°C) der Gummi-Chips gerät, wird er schnell auf unter 100°C gekühlt. Dabei wird er teilweise mit der Abgabe der Kondensationswärme $r_K$ = 2.500 kJ/kg kondensiert. Durch diese Kondensationswärme werden die Gummiabfälle auf eine Temperatur $T_{Erw}$ = 100°C erwärmt. Die Temperatur der Erwärmung wird anhand der Angaben des Temperatursensors 9 kontrolliert.

Um 500 kg Gummiabfälle von der Anfangstemperatur $T_0$ = 20°C auf eine Erwärmungstemperatur $T_{Erw}$ = 100°C zu erwärmen, werden 30 kg Wasserdampf kondensiert. Das bedeutet, dass bei einem Wasserdampfdurchfluss von 600 kg/h die Erwärmungszeit der Abfälle auf eine Temperatur von 100°C und die Zeit bis zum Schluss des Kondensationsprozesses 3 Min. betragen wird.

Der Wasserdampf aus der Schicht der Chips im Bunker 6 verdrängt die Luft, die mit dem Dampfstrom in den Brenner 10 strömt.

Nachdem die Chips auf eine Temperatur $T_{Erw}$ = 100°C erwärmt sind, wird die Wasserdampfzuführung zum Bunker 2 vom Dampferzeuger 7 eingestellt. Die Erwärmung der Schicht aus den Chips im Bunker 6 bis auf die $T_{Erw}$ = 100°C bedeutet, dass die Luft fast vollständig durch den Wasserdampf verdrängt wurde.

Gleichzeitig mit dem Luft- und Wasserdampfeintritt aus dem Bunker 6 wird der Kraftstoff in den Brenner 10 aus dem Behälter 11 über den Hahn 12 mit einem Durchsatz von 150 kg/h zugeführt und verbrannt. Die sich bildenden Verbrennungsprodukte strömen aus dem Brenner 10 bei einer hohen Temperatur (ca. $T_{Brenner}$ = 1.000°C) mit einem Durchsatz von 3.900 kg/h in die Mantelheizung 13 ein. Bei der Verbrennung von 1 kg flüssigen Kraftstoffs bilden sich 26 kg Verbrennungsprodukte mit einer Temperatur von 1.000°C aus.

Bei dem Durchgang der Verbrennungsprodukte durch die Mantelheizung 13 werden sie auf eine Temperatur $T_1$ = 600°C gekühlt. Sie treten in den Dampferzeuger 7 aus, wo sie auf eine Temperatur $T_2$ = 120°C gekühlt werden. Die Wärme der Verbrennungsprodukte wird für die Erzeugung des Wasserdampfes in einer Menge von 600 kg/h verbraucht.

Danach werden die Verbrennungsprodukte aus dem Dampferzeuger 7 mittels des Saugzugs 14 mit einem Durchfluss von 3.900 kg/h in den Schornstein 15 abgeführt. Die Verbrennungsprodukte sind dabei bis auf eine Temperatur $T_2$ = 120°C gekühlt.

Dies ermöglicht es, die Wärme der aus der Mantelheizung 13 abzuführenden Verbrennungsprodukte nützlich zu verwenden. Auf diese Weise kann der Energieverbrauch für das Verfahren zur Verwertung von Abfällen reduziert werden.

Im entgegengesetzten Fall wird bei der Abführung der Verbrennungsprodukte mit einer $T_1$ = 600°C direkt in den Schornstein mit einem Durchfluss von 3.900 kg/h folgende Menge thermischer Energie $Q_{ATM}$ an die Umgebung ausgestoßen:

$$Q_{ATM} = C_p^{Vp} \, M_{Vp} \, (T_1 - T_p) = 1{,}2 \text{ kJ/kg°C} \times 3.900 \text{ kg/h} \times (600°C - 20°C) =$$

$$= 2.246.400 \text{ kJ/h, oder } 624 \text{ W,}$$

worin

$C_p^{Vp}$ die spezifische Wärmekapazität der Verbrennungsprodukte 1,2 kJ/kg°C,
$M_{Vp}$ der Durchfluss der Verbrennungsprodukte 3.900 kg/h,
$T_1$ die Temperatur der Verbrennungsprodukte am Austritt 600 °C und
$T_p$ die Temperatur der Verbrennungsprodukte nach dem Dampferzeuger 120 °C ist.

Somit wird die Wärmeleistung in einer Menge von 624 kW nicht genutzt. Diese Menge ist für die Erzeugung von 600 kg/h Wasserdampf ausreichend, der während der Verwertung verwendet wird.

Die Anwendung dieser Wärmeleistung für die Erzeugung des Wasserdampfs ermöglicht es im vorliegenden Fall, den Energieverbrauch für das Verfahren zur Verwertung der Abfälle zu reduzieren.

Zum Zeitpunkt, wenn die Temperatur der Gummiabfälle im Bunker 6 eine Temperatur $T_{Dampf}$ = 100°C erreicht, wird der Verschluss 4 geöffnet. Die Abfälle aus dem Bunker 6 kommen unter dem Einfluss ihres eigenen Gewichts und in einer Menge von 500 kg in den Ofen 16. Die Dampftemperatur wird anhand der Angaben des Temperatursensors 9 kontrolliert. Danach wird der Verschluss 4 geschlossen. Gleichzeitig mit dem Öffnen des Verschlusses 4 wird die Schnecke 18 mittels des Motors 17 mit einer Geschwindigkeit von 2 U/min in Drehung versetzt. Die in den Ofen 16 ausgeladenen Abfälle bilden auf der Schnecke 18 die Form einer festen Schicht. Bei der Schneckendrehung werden diese Abfälle durch die Schnecke 18 der Schicht allmählich entnommen (aus der Schicht ausgeklaubt). Die Schnecke 18 transportiert die Abfälle von der Beschickung zur Entleerungsvorrichtung (zum Kanal) 19 mit einem Verbrauch von 1.000 kg/h. Somit werden 500 kg gummihaltiger Abfälle durch die Schnecke 18 im Laufe von 30 Min. aus der Schicht ausgeklaubt und befördert. Innerhalb dieser Zeit wird aus dem Speicher 1 der Bunker 2 mit einem neuen Satz Abfälle in einer Menge von 500 kg beschickt und mit Wasserdampf eingeblasen. Folglich, um eine Leistung von 1.000 kg/h sicherzustellen, müssen innerhalb einer Stunde 2 Sätze Abfälle mit Wasserdampf eingeblasen werden.

Gleichzeitig mit der Zuführung der Gummiabfälle in den Ofen 16, d. h. mit der Entladung der Abfälle aus dem Bunker 6, wird die schwere Kohlenwasserstofffraktion aus dem Behälter 20 mit der schweren Kohlenwasserstofffraktion mittels der Regelpumpe 21 in die Einspritzdüse 23 geleitet. Die Zuführung erfolgt über den Durchflussmesser 22 mit einer Durchflussmenge von 30 kg/h.

Beim Anlaufen der Anlage, solange die schwere Kohlenwasserstofffraktion noch nicht produziert wurde, wird der Behälter 20 mit 30 kg Masut gefüllt. Masut wird als schwere Kohlenwasserstofffraktion eingesetzt, denn die chemisch-physikalischen Parameter der schweren Fraktion der thermischen Zersetzung von gummihaltigen Abfällen sind den gleichen Parametern von Masut ähnlich.

Der Wasserdampf wird vom Dampferzeuger 7 mit der Regelpumpe 24 über den Durchflussmesser 25 mit einer Durchflussmenge von 300 kg/h der Einspritzdüse 23 zugeführt.

Durch die Regelung des Durchflusses von Wasserdampf und schwerer Kohlenwasserstofffraktion wird das Massenverhältnis schwere Fraktion zu Wasserdampf, die der Einspritzdüse 23 zugeführt werden, im Bereich von (0,1) : 1 festgelegt, was (30 kg) : 300 kg beträgt.

Im vorliegenden Fall, um eine Leistung in Bezug auf die Abfälle von 1.000 kg/h sicherzustellen, wird ein Wasserdampfdurchfluss von 300 kg/h festgelegt. Der Durchfluss der schweren Kohlenwasserstofffraktion wird auf 30 kg/h festgelegt.

In der Einspritzdüse 23 wird die schwere Kohlenwasserstofffraktion mit einer Tropfengröße von 0,1 bis 0,5 mm unter der Wirkung des Wasserdampfstroms mit einer Temperatur $T_{Dampf}$ = 100°C versprüht. Als Ergebnis bildet sich im Ofen 16 ein Zweiphasenmedium (Wasserdampf und Tropfen schwerer Kohlenwasserstofffraktion). In dieses Medium gelangen die Gummiabfälle, die aus dem Bunker 6 beschickt werden.

Das sich bildende Zweiphasenmedium überträgt die Wärme von der Mantelheizung 13 zur Oberfläche der Gummiabfälle mittels Konvektion. Wegen der vorhandenen Tropfen der schweren Fraktion weist dieses Medium eine größere Dichte als die von Wasserdampf auf. Dies ist dadurch bedingt, dass die Dichte der schweren Kohlenwasserstofffraktion 950 kg/m³ beträgt. Die Wasserdampfdichte beträgt im vorliegenden Fall 0,6 kg/m³. Im vorliegenden Fall wird die Dichte des sich bildenden Zweiphasengemisches bei der Versprühung von 30 kg schwerer Kohlenwasserstofffraktion in 300 kg Wasserdampf wie folgt sein:

$$\rho = (M_{Dampf} + MsFr)/V_{Gem} = (300 \text{ kg} + 30 \text{ kg})/500 \text{ m}^3 = 0{,}67 \text{ kg/m}^3, \ V_{Gem} = 300 \text{ kg}/0{,}6 \text{ kg/m}^3 = 500 \text{ m}^3,$$

worin

$M_{Dampf}$ die Wasserdampfmasse 300 kg und
MsFr die Masse von schwerer Fraktion 30 kg ist.

Im vorliegenden Fall hat das Zweiphasenmedium eine um 12% größere Dichte als die von reinem Wasserdampf. Im Vergleich zur Wärmeübertragung durch den reinen Wasserdampf wird die Wärmeübertragung durch ein solches Zweiphasenmedium sowohl aufgrund einer höheren Dichte als auch aufgrund der höheren Koeffizienten des Wärmeübergangs des Zweiphasenmediums zu den Gummiabfällen intensiviert. Die steigenden Wärmeübergangskoeffizienten und demzufolge die höhere Intensität der Wärmeübertragung sind dadurch bedingt, dass das Zweiphasenmedium Tropfen der flüssigen Fraktion aufweist. Wenn die erhitzten Tropfen der flüssigen Fraktion auf die Oberfläche der Gummiabfälle geraten, entstehen infolge dieses Kontakts große Temperaturdifferenzen (Temperaturdifferenz zwischen einem heißen Tropfen und einer kühleren Oberfläche der Abfälle). Dadurch wird die Wärmeübertragung von den erhitzten Tropfen zu den Abfällen intensiviert (der Wärmestrom wird größer).

Die Reduzierung des Gehalts an schwerer Fraktion im Gemisch, d. h. bei einem Massenverhältnis der schweren Fraktion zum Wasserdampf unter (0,1) : 1, führt zu einer niedrigeren Intensität der Wärmeübertragung von diesem Gemisch zu den Abfällen.

Durch die Zuführung des Wasserdampfs und der versprühten schweren Kohlenwasserstofffraktion der Beschickungszone für die Abfälle wird eine große Temperaturdifferenz zwischen dem Wasserdampf mit den Tropfen schwerer Fraktion (die Temperatur beträgt mindestens 110°C) und den kalten Abfällen mit einer Temperatur von ca. 30 bis 40°C sichergestellt. Dies (d. h. die große Temperaturdifferenz) sorgt für hohe Wärmeströme. Infolgedessen werden die Erwärmung der Abfälle beschleunigt und die Verwertungszeit reduziert.

Die Gummiabfälle werden mittels der Schnecke 18 mit einem Verbrauch von 1.000 kg/h befördert. Sie werden sowohl aufgrund des Wärmeaustausches mit der Mantelheizung 13 selbst als auch durch den Wärmeaustausch mit der schweren Kohlenwasserstofffraktion erwärmt, die im Wasserdampf-Medium versprüht ist. Die Tropfen der erwärmten schweren Kohlenwasserstofffraktion fallen an der Oberfläche der Gummiabfälle aus. Sie erwärmen diese intensiv. Außerdem wird die Oberflächenschicht der Abfälle durch die Tropfen der schweren Kohlenwasserstofffraktion aufgelöst. All das führt zur Beschleunigung der thermischen Zersetzung von Gummi, d. h. zur Reduzierung der Verwertungszeit. Demzufolge wird auch der Energieaufwand für das Verwertungsverfahren reduziert.

Bei der Erwärmung der Gummiabfälle im Ofen 16 auf eine Temperatur von 500°C beginnt die Thermolyse von Gummiabfällen. Sie verläuft mit der Freisetzung von gasförmigen Produkten und festem Kohlenstoffrückstand. Die Temperatur im Ofen 16 wird dabei nach den Angaben des Temperatursensors 26 kontrolliert und durch Änderung der Kraftstoffmenge geregelt, die im Brenner 10 verbrannt wird.

Im vorliegenden Fall werden bei der Leistung von 1.000 kg/h Gummiabfällen 400 kg/h gasförmige Produkte der thermischen Zersetzung der Abfälle und 600 kg/h von festem Rückstand gebildet. Der feste Rückstand enthält 100 kg Metall (Drahtlitze) und 72 kg Metalloxide (Zink-, Titan-, Eisen-, Aluminium-, Kupferoxide u. a.).

Gasförmige Zersetzungsprodukte der Abfälle vermischen sich mit dem Wasserdampf und der versprühten schweren Kohlenwasserstofffraktion. Infolgedessen bildet sich im Ofen 16 ein Zweiphasengemisch. Der Druck im Reaktor steigt und wird höher als der Atmosphärendruck.

Im vorliegenden Fall vermischen sich 400 kg/h gasförmiger Zersetzungsprodukte der Abfälle mit 300 kg/h Wasserdampf und 20 kg/h gasförmigen Produkten der thermischen Zersetzung der schweren Kohlenwasserstofffraktion. Infolgedessen wird ein Gas-Dampf-Gemisch in einer Menge von 720 kg/h gebildet.

Bei der Erwärmung im Ofen 16 erfolgt auch eine teilweise Verdampfung sowie thermische Zersetzung der schweren Kohlenwasserstofffraktion mit der Bildung von Kohlenwasserstoffen mit einer niedrigeren Molekülmasse (wertvolle leichte Kohlenwasserstoffe) und Ruß.

Angenommen, dass sich infolge thermischer Zersetzung von 30 kg/h schwerer Kohlenwasserstofffraktion 20 kg/h gasförmige Produkte mit einer niedrigeren Molekülmasse bilden, als die schwere Ausgangsfraktion. Die restlichen 10 kg/h von 30 kg/h schwerer Fraktion in Form von Ruß vermischen sich mit dem festen Rückstand der thermischen Zersetzung der gummihaltigen Abfälle.

Infolge thermischer Zersetzung der im Reaktor versprühten schweren Kohlenwasserstofffraktion bilden sich wertvolle Kohlenwasserstoffe mit einer niedrigeren Molekülmasse. Außerdem bildet sich Ruß mit einem niedrigen Gehalt an Metalloxiden (Asche), weil die schwere Kohlenwasserstoff-Ausgangsfraktion einen niedrigen Gehalt an Metalloxiden hatte.

Somit erhöht sich die Qualität von Produkten der Verwertung gummihaltiger Abfälle.

Die sich bildenden gasförmigen Zersetzungsprodukte der Abfälle, vermengt mit dem Wasserdampf und den Produkten thermischer Zersetzung der schweren Fraktion, werden in Form eines Gas-Dampf-Gemisches aus dem Ofen 16 dem Gaswäscher 29 zugeführt. Die Zuführung erfolgt über den Durchflussmesser 28. Die Durchflussmenge wird mit dem Hahn 27 so geregelt, dass sie 720 kg/h nicht übersteigt. Diese Regelung der Durchflussmenge, nämlich der Menge des Gas-Dampf-Gemisches, das aus dem Reaktor abgeleitet wird, ist notwendig, um den Druck im Reaktor höher als den Atmosphärendruck aufrechtzuerhalten. Dies ist erforderlich, um die Möglichkeit auszuschließen, dass Luft in den Reaktor angesaugt wird und sich im Reaktor ein explosionsgefährliches Gemisch bildet.

Gleichzeitig wird Wasser aus dem Sumpf 30 mittels der Regelpumpe 31 über den Durchflussmesser 32 der Einspritzdüse 33 zugeführt. Dieses Wasser hat sich im Sumpf 30 infolge der Abtrennung (Abschichtung) des Kondensates gebildet.

Der Durchfluss des Gas-Dampf-Gemisches wird mit dem Hahn 27, und die Wasserdurchflussmenge wird mit der Pumpe 31 geregelt. Somit wird die Durchflussmenge von Wasser, das mittels der Einspritzdüse 33 in den Gas-Dampf-Gemischstrom gesprüht wird, in einer Größe von 5% vom Massenstrom (Massendurchsatz) des Gemisches festgelegt.

Im vorliegenden Fall beträgt die Durchflussmenge von Wasser, das in den Gemischstrom gesprüht wird, 36 kg/h bei der Durchflussmenge des Gas-Dampf-Gemisches von 720 kg/h.

Infolge des Wärmeaustausches des Gas-Dampf-Gemisches mit den Wassertropfen erfolgen im Gaswäscher 29 die Erwärmung und die Verdampfung der Wassertropfen. Das Gemisch wird dabei von einer Temperatur von 400°C auf eine Temperatur von 350°C gekühlt. Infolge der Kühlung des Gemisches kommt die Kondensation hochmolekularer Kohlenwasserstoffe mit der Absonderung (Abscheidung) der schweren Fraktion in einer Menge von 30 kg/h zustande. Diese Kondensation verläuft nicht auf der Oberfläche, sondern im Volumen. Aus diesem Grund werden die Dämpfe hochmolekularer Kohlenwasserstoffe mit der Bildung von Tropfen kondensiert. An diesen Tropfen setzt sich Kohlenstoff-Feinstaub (Ruß) in einer Menge von 10 kg/h ab. Dieser Kohlenstoff-Feinstaub (Ruß) wird aus dem Ofen 16 ausgetragen. Die sich bildenden Tropfen fallen im Gaswäscher mit der Bildung eines Gemisches aus, und zwar 30 kg/h flüssiger Phase und 10 kg/h Ruß. Das sich bildende Gemisch in einer Menge von 40 kg/h wird aus dem Gaswäscher 29 in den Behälter 20 abgeleitet.

Das versprühte Wasser in einer Menge von 36 kg/h verdampft vollständig mit der Bildung von Wasserdampf. Die Abkühltemperatur des Gas-Dampf-Gemisches im Gaswäscher 29 wird dabei nach den Angaben des Temperatursensors 34 kontrolliert und durch Änderung der Durchflussmenge des Sprühwassers geregelt. Die Temperatur wird bei (mit dem Wert von) 350°C aufrechterhalten.

Bei der Zuführung von einer Wassermenge von weniger als 5% vom Massenstrom (Massendurchsatz) des Gemisches wird die Kühlung des Gemisches gering sein. Der Hauptteil der schweren Kohlenwasserstofffraktion wird aus dem Gas-Dampf-Gemisch nicht abgesondert (abgeschieden) sein. Dies bedeutet, dass die schwere Kohlenwasserstofffraktion, die nicht im Gaswäscher 29 abgesondert wurde, in den Rohren des Kondensators 35 ausfallen wird. Dies kann den Ausfall des Systems herbeiführen.

Das von der schweren Kohlenwasserstofffraktion und dem Kohlenstoff-Feinstaub gereinigte Gas-Dampf-Gemisch wird aus dem Gaswäscher 29 mit einem Durchfluss von 716 kg/h in den Kondensator 35 abgeführt. Da im Gaswäscher 29 aus 720 kg/h Gas-Dampf-Gemisch 30 kg/h schwere Fraktion und 10 kg/h Ruß abgesondert wurden, dabei aber 36 kg/h Wasserdampf hinzukamen, beträgt die Gas-Dampf-Gemisch-Menge, die in den Kondensator abgeführt wird, 716 kg/h.

Im Kondensator wird das Gas-Dampf-Gemisch auf eine Temperatur von $T_{Kühl} = 30°C$ gekühlt. Dies erfolgt dadurch, dass das Wasser vom Kühlturm 36 durch das Kondensatorgehäuse gepumpt wird. Die Temperatur im Kondensator wird dabei mit den Angaben des Temperatursensors 37 kontrolliert.

Durch die Abkühlung im Kondensator 35 wird ein Teil des Gas-Dampf-Gemisches mit der Bildung des Kondensates in einer Menge von 690 kg/h kondensiert. Dabei enthalten 690 kg Kondensat 336 kg Wasser und 354 kg flüssige Kohlenwasserstoffe.

Das Wasser aus dem Kondensator 35 wird mit einem Durchfluss von 690 kg/h in den Sumpf 30 abgelassen. Im Sumpf werden Wasser und flüssige Kohlenwasserstoffe getrennt. Da das Wasser eine größere Dichte aufweist, sammelt es sich im unteren Teil des Sumpfes 30 an. Die flüssigen Kohlenwasserstoffe sammeln sich im oberen Teil des Sumpfes an. Die flüssigen Kohlenwasserstoffe werden aus dem Sumpf 30 über den Hahn 38 mit einem Durchfluss von 354 kg/h in den Sammelbehälter 39 abgelassen. Aus dem Sumpf 30 wird das Wasser über den Durchflussmesser 40 mit einem Durchfluss von 360 kg/h dem Filter 41 zugeführt. Im Filter 41 wird das Wasser von organischen Verbindungen (Kohlenwasserstoffen) gereinigt. Danach wird das Wasser dem Dampferzeuger 7 zur Erzeugung von Wasserdampf zugeführt. Der Wasserumlauf im geschlossenen Kreislauf ermöglicht es, die Emission von Wasser an die Umgebung auszuschließen. Dadurch können die ökologischen Parameter des Verwertungsverfahrens verbessert werden, d. h. schädliche Emissionen an die Umgebung werden vermindert.

Die nicht kondensierenden Kohlenwasserstoffe aus dem Kondensator 35 werden mittels der Regelpumpe 42 mit einem Durchfluss von 26 kg/h dem Brenner 10 zugeführt und verbrannt.

Da der Wärmewert (die Verbrennungswärme) der nicht kondensierenden Kohlenwasserstoffe 30.000 kJ/kg beträgt, entspricht die Verbrennung von 26 kg/h Kohlenwasserstoffen der Verbrennung von 20 kg/h flüssigen Kraftstoffs mit einem Wärmewert von 40.000 kJ/kg. Deshalb wird der Verbrauch von flüssigem Kraftstoff, der dem Brenner 10 aus dem Behälter 11 zugeführt wird, um 20 kg/h reduziert, d. h. bis zu einer Größe von 130 kg/h.

Die Verbrennung nicht kondensierender Gase ermöglicht es, die Emission von diesen an die Umgebung zu vermeiden. Auch wird der Verbrauch von zusätzlichem Kraftstoff für das Verfahren zur Verwertung gummihaltiger Abfälle reduziert.

Die flüssigen Kohlenwasserstoffe aus dem Sammelbehälter 39 werden mittels der Regelpumpe 43 dem Brenner 10 zugeführt und verbrannt. Die Zuführung erfolgt über den Durchflussmesser 44 mit einer Durchflussmenge von 130 kg/h. Dabei wird die Zuführung von Kraftstoff aus dem Behälter 11 vollständig eingestellt.

Durch die Verwendung der flüssigen Kohlenwasserstoffe als Kraftstoff kann der Verbrauch von zusätzlichem Kraftstoff ausgeschlossen werden. Diese flüssigen Kohlenwasserstoffe werden dabei im Zuge der Verwertung der Abfälle gewonnen.

Der feste Rückstand aus dem Ofen 16 wird durch die Entleerungsvorrichtung (den Kanal) 19 mit Hilfe der Schleusen-Aufgabevorrichtung (des Schleusenspeisers) 45 mit einem Verbrauch von 600 kg/h in die Kühlvorrichtung 46 mit der Mantelkühlung 47 abgeführt. Der Motor 48 wird angelassen, und die Schnecke 49 wird in Drehung versetzt. Die Schnecke 49 befördert den festen Rückstand von der Beschickung zur Entleerungsvorrichtung (zum Kanal) 19. Gleichzeitig wird das Kühlwasser vom Kühlturm 36 durch die Mantelkühlung 47 der Kühlvorrichtung 46 gepumpt. Bei der Bewegung durch die Kühlvorrichtung wird der feste Kohlenstoffrückstand bis auf eine Temperatur von max. 100°C gekühlt. Die Temperatur wird anhand der Angaben des Temperatursensors 50 kontrolliert. Der gekühlte feste Rückstand aus der Kühlvorrichtung 46 wird mit einem Verbrauch von 600 kg/h in den Magnetscheider 51 entladen. Im Magnetscheider 51 werden aus dem festen Rückstand 100 kg/h Metall abgeschieden. Aus dem Magnetscheider (Separator) wird Metall mit einem Verbrauch von 100 kg/h in den Speicher 52 abgeführt. Der vom Metall gereinigte feste Rückstand wird mit einem Verbrauch von 500 kg/h dem dielektrischen Abscheider 53 zugeführt. Im dielektrischen Abscheider werden aus dem festen Rückstand Nichtleiter (Oxide) abgeschieden, darunter Zinkoxid in einer Menge von 62 kg/h. Aus dem dielektrischen Abscheider wird Zinkoxid, gemischt mit anderen Oxiden (Silicium-, Calcium-, Titanoxide usw.), in einer Menge von 62 kg/h in den Speicher 54 entladen.

Der Gehalt an Zinkoxid erreicht in diesem Gemisch 30 bis 40% je nach dem Typ der gummihaltigen Abfälle. Deshalb stellt dieses Gemisch einen hochwertigen Rohstoff zur Gewinnung von Zinkoxid dar.

Der Kohlenstoffrückstand kann nicht vollständig von den Oxiden nur durch dielektrische Trennung gereinigt werden, weil ein Teil der Oxide mit den Kohlenstoff-Teilchen verbunden (gebunden) ist. Aus diesem Grund sind solche Teilchen elektrisch leitfähig, zum Unterschied von Oxiden. Im dielektrischen Abscheider werden sie zusammen mit den Kohlenstoff-Teilchen getrennt.

Der gereinigte feste Rückstand wird aus dem dielektrischen Abscheider 53 mit einem Verbrauch von 438 kg/h in den Speicher 55 entladen. Infolge der Abscheidung aus dem festen Rückstand des Metalls sowie eines Teils der Metalloxide erhöht sich der Kohlenstoffgehalt. Bei Vorhandensein von 65 Gew.-% Kohlenstoff in 600 kg von nicht gereinigtem (nicht behandeltem) festem Rückstand wird der Kohlenstoffgehalt nach der Reinigung 89 Gew.-% betragen. Aus diesem Grund stellt der auf solche Weise behandelte feste Rückstand einen dem Industrieruß analogen Stoff dar.

Somit, infolge der konsequenten Magnet- und dielektrischen Trennung von festem Rückstand, werden Qualitäts-Industrieruß und ein hochwertiger Rohstoff zur Gewinnung von Zinkoxid hergestellt.

Beispiel 2

Aus dem Speicher 1 werden dem Bunker 2 bei geschlossenen Verschlüssen 3 und 4 zerkleinerte Gummiabfälle 5 in Form von Chips zugeführt. Diese weisen die Maße von 20 mm x 20 mm x 20 mm und eine Schüttdichte von 800 kg/m$^3$ auf. Bei der Beschickung des Bunkers 2 mit einem Volumen von 1 m$^3$ wird die Menge von Chips in diesem Bunker 800 kg betragen. Nachdem der Bunker 2 gefüllt ist, wird der Verschluss 3 geöffnet. Die Abfälle aus dem Bunker 1 werden nach unten in den Bunker 6 geschüttet und bleiben auf dem Verschluss 4 liegen. Danach wird der Verschluss 3 geschlossen. Der Wasserdampf wird mit einer einstellbaren (regelbaren) Durchflussmenge von 600 kg/h und einer Temperatur von 110°C vom Dampferzeuger 7 mittels der Pumpe 8 dem Bunker 6 zugeführt. Wenn der Wasserdampf auf die große kalte Oberfläche (die Temperatur der Chips liegt bei 20°C) der Gummi-Chips gerät, wird ein Teil des Wasserdampfs schnell auf unter 100°C gekühlt. Dabei wird er mit der Abgabe der Kondensationswärme $r_K$ = 2.500 kJ/kg kondensiert. Durch diese Kondensationswärme werden die Gummiabfälle auf eine Temperatur $T_{Erw}$ = 100°C erwärmt. Die Temperatur der Erwärmung wird mit den Angaben des Temperatursensors 9 kontrolliert.

Der nicht kondensierende Wasserdampf verdrängt aus der Schicht der Chips die Luft, die mit dem Dampfstrom in den Brenner 10 strömt.

Um 800 kg Gummiabfälle von der Anfangstemperatur $T_0$ = 20°C auf eine Erwärmungstemperatur $T_{Erw}$ = 100°C zu erwärmen, werden 50 kg Wasserdampf kondensiert. Das bedeutet, dass bei einem Wasserdampfdurchfluss von 600 kg/h die Erwärmungszeit der Abfälle auf eine Temperatur von 100°C 5 Min. betragen wird.

Die Erwärmungszeit der Abfälle auf eine Temperatur $T_{Erw}$ = 100°C bedeutet, dass der Wasserdampfdruck eine Größe erreicht hat, die dem Atmosphärendruck (Normaldruck) entspricht. Die ganze Luft ist dabei aus den Abfällen in den Brenner 10 verdrängt.

Nachdem die Chips auf eine Temperatur $T_{Erw}$ = 100°C erwärmt sind, wird die Wasserdampfzuführung an den Bunker 2 vom Dampferzeuger 7 eingestellt.

Gleichzeitig mit dem Luft- und Wasserdampfeintritt aus dem Bunker 2 wird der Kraftstoff in den Brenner 10 aus dem Behälter 11 über den Hahn 12 mit einem Durchsatz von 240 kg/h zugeführt und verbrannt. Die sich bildenden Verbrennungsprodukte strömen aus dem Brenner 10 bei einer hohen Temperatur (ca. $T_{Brenner}$ = 1.000°C) mit dem Durchsatz von 6.240 kg/h in die Mantelheizung 13 ein. Bei der Verbrennung von 1 kg flüssigen Kraftstoffs bilden sich 26 kg Verbrennungsprodukte mit einer Temperatur von 1.000°C aus.

Bei dem Durchgang der Verbrennungsprodukte durch die Mantelheizung 13 werden sie auf eine Temperatur T = 600°C gekühlt. Sie treten in den Dampferzeuger 7 aus, wo sie auf eine Temperatur $T_2$ = 120°C gekühlt werden. Die Wärme der Verbrennungsprodukte wird für die Erzeugung des Wasserdampfes in einer Menge von 600 kg/h verbraucht.

Danach werden die Verbrennungsprodukte aus dem Dampferzeuger 7 mittels des Saugzugs 14 mit einem Durchfluss von 6.240 kg/h in den Schornstein 15 abgeführt. Die Verbrennungsprodukte sind dabei bis auf eine Temperatur $T_2$ = 120°C gekühlt. Dies ermöglicht es, die Wärme der aus der Mantelheizung 13 abzuführenden Verbrennungsprodukte nützlich zu verwenden. Auf diese Weise kann der Energieverbrauch für das Verfahren zur Verwertung von Abfällen reduziert werden.

Im entgegengesetzten Fall wird bei der Abführung der Verbrennungsprodukte mit einer $T_1$ = 600°C direkt in den Schornstein mit einem Durchfluss von 6.240 kg/h folgende Menge thermischer Energie $Q_{ATM}$ an die Umgebung ausgestoßen:

$$Q_{ATM} = C_p{}^{Vp}\ M_{Vp}\ (T_1 - T_p) = 1{,}2\ kJ/kg°C \times 6.240\ kg/h \times (600°C - 120°C) = 3.594.240\ kJ/h\ oder\ 998\ kW,$$

worin

$C_p{}^{Vp}$ die spezifische Wärmekapazität der Verbrennungsprodukte 1,2 kJ/kg°C,
$M_{Vp}$ der Durchfluss der Verbrennungsprodukte 6.240 kg/h,
$T_1$ die Temperatur der Verbrennungsprodukte am Austritt 600 °C und
$T_p$ die Temperatur der Verbrennungsprodukte nach dem Dampferzeuger 120 °C ist.

Demnach wird die Wärmeleistung in einer Menge von 998 kW nicht genutzt. Diese Menge ist für die Erzeugung von 600 kg/h Wasserdampf ausreichend, der während der Verwertung verwendet wird.

Die Anwendung dieser Wärmeleistung für die Erzeugung des Wasserdampfs ermöglicht es im vorliegenden Fall, den Energieverbrauch für das Verfahren zur Verwertung der Abfälle zu reduzieren.

Der Verschluss 4 wird geöffnet. Die Abfälle in einer Menge von 800 kg werden aus dem Bunker 6 unter dem Einfluss ihres eigenen Gewichtes in den Ofen 16 verschüttet. Danach wird der Verschluss 4 geschlossen. Gleichzeitig mit dem Öffnen des Verschlusses 4 wird die Schnecke 18 mittels des Motors 17 mit einer Geschwindigkeit von 4 U/min in Drehung versetzt. Die in den Reaktor ausgeladenen Abfälle bilden auf der Schnecke 18 eine feste Schicht. Bei der Schneckendrehung werden diese Abfälle durch die Schnecke 18 der Schicht entnommen (aus der Schicht ausgeklaubt). Die Schnecke 18 transportiert die Abfälle von der Beschickung zur Entleerungsvorrichtung (zum Kanal) 19 mit einem Verbrauch von 1.600 kg/h. Somit werden 800 kg gummihaltiger Abfälle durch die Schnecke 18 im Laufe von 30 Min.

aus der Schicht ausgeklaubt und befördert. Innerhalb dieser Zeit wird aus dem Speicher 1 der Bunker 2 mit einem neuen Satz Abfälle in einer Menge von 800 kg beschickt und mit Wasserdampf eingeblasen. Um eine Leistung von 1.600 kg/h sicherzustellen, müssen folglich innerhalb einer Stunde 2 Sätze Abfälle beschickt und mit Wasserdampf eingeblasen werden.

Gleichzeitig mit der Zuführung der Gummiabfälle in den Ofen 16, d. h. mit der Entladung der Abfälle aus dem Bunker 6, wird die schwere Kohlenwasserstofffraktion aus dem Behälter 20 mit der schweren Kohlenwasserstofffraktion in die Einspritzdüse 23 geleitet. Dies erfolgt mittels der Regelpumpe 21 über den Durchflussmesser 22 mit einer Durchflussmenge von 240 kg/h.

Beim Anlaufen der Anlage, solange die schwere Kohlenwasserstofffraktion noch nicht produziert wurde, wird der Behälter 20 mit 240 kg Masut gefüllt. Masut wird als schwere Kohlenwasserstofffraktion eingesetzt, denn die chemisch-physikalischen Parameter der schweren Fraktion der thermischen Zersetzung von gummihaltigen Abfällen sind den gleichen Parametern von Masut ähnlich.

Der Wasserdampf wird vom Dampferzeuger 7 der Einspritzdüse 23 zugeführt. Dies erfolgt mit der Regelpumpe 24 über den Durchflussmesser 25 mit einer Durchflussmenge von 80 kg/h.

Durch die Regelung des Durchflusses von Wasserdampf und schwerer Kohlenwasserstofffraktion wird das Massenverhältnis schwere Fraktion zu Wasserdampf, die der Einspritzdüse 23 zugeführt werden, im Bereich von (0,5) : 1 festgelegt, was (240 kg) : 480 kg beträgt.

Um im vorliegenden Fall eine Leistung in Bezug auf die Abfälle von 1.600 kg/h sicherzustellen, wird ein Wasserdampfdurchfluss von 480 kg/h festgelegt. Der Durchfluss der schweren Kohlenwasserstofffraktion wird mit 240 kg/h festgelegt.

In der Einspritzdüse 23 wird die schwere Kohlenwasserstofffraktion mit einer Tropfengröße von 0,1 bis 0,5 mm unter der Wirkung des Wasserdampfstroms mit einer Temperatur von $T_{Dampf}$ = 160°C versprüht. Als Ergebnis bildet sich im Ofen 16 ein Zweiphasenmedium (Wasserdampf und Tropfen schwerer Kohlenwasserstofffraktion). In dieses Medium gelangen die Gummiabfälle, die aus dem Bunker 6 beschickt werden.

Das sich bildende Zweiphasenmedium überträgt die Wärme von der Mantelheizung 13 zur Oberfläche der Gummiabfälle mittels Konvektion. Wegen der vorhandenen Tropfen der schweren Fraktion weist dieses Medium eine größere Dichte als die von Wasserdampf auf. Dies ist dadurch bedingt, dass die Dichte der schweren Kohlenwasser-stofffraktion 950 kg/m$^3$ beträgt. Die Wasserdampfdichte beträgt im vorliegenden Fall 0,6 kg/m$^3$. Im vorliegenden Fall wird die Dichte des sich bildenden Zweiphasengemisches bei der Versprühung von 240 kg schwerer Kohlenwasserstofffraktion in 480 kg Wasserdampf wie folgt sein:

$$P = (M_D + M_{sFr})/V_{Gem} = (480 \text{ kg} + 240 \text{ kg})/800 \text{ m}^3 = 0,90 \text{ kg/m}^3, V_{Gem} = 480 \text{ kg}/0,6 \text{ kg/m}^3 = 800 \text{ m}^3,$$

worin

$M_D$ die Wasserdampfmasse 480 kg und
$M_{sFr}$ die Masse der schweren Fraktion 240 kg ist.

Im vorliegenden Fall hat das Zweiphasenmedium eine um 50% größere Dichte als die von reinem Wasserdampf. Im Vergleich zur Wärmeübertragung durch den reinen Wasserdampf wird deshalb die Wärmeübertragung durch ein solches Zweiphasenmedium sowohl aufgrund einer höheren Dichte als auch aufgrund der höheren Koeffizienten des Wärmeübergangs vom Zweiphasenmedium zu den Gummiabfällen intensiviert. Die steigenden Wärmeübergangskoeffizienten und demzufolge die höhere Intensität der Wärmeübertragung sind dadurch bedingt, dass das Zweiphasenmedium Tropfen flüssiger Fraktion aufweist. Wenn die erhitzten Tropfen flüssiger Fraktion auf die Oberfläche der Gummiabfälle geraten, entstehen infolge dieses Kontakts große Temperaturdifferenzen (Temperaturdifferenz zwischen einem heißen Tropfen und einer kühleren Oberfläche der Abfälle). Dadurch wird die Wärmeübertragung von den erhitzten Tropfen zu den Abfällen intensiviert (der Wärmestrom wird größer).

Bei der Erhöhung des Gehalts an schwerer Fraktion im Gemisch, d. h. bei einem Massenverhältnis der schweren Fraktion zum Wasserdampf über (0,5) : 1, erhöht sich der Durchfluss schwerer flüssiger Fraktion. Beim Versprühen der schweren Fraktion in einer Menge von über 240 kg/h im Dampfstrom von 480 kg/h wird der Dampfstrom schnell gekühlt und kondensiert. Dies bedeutet, dass es bei einem Verhältnis über (0,5) : 1 nicht möglich ist, ein Zweiphasenmedium in Form von Tropfen der schweren Fraktion im Wasserdampfstrom zu erhalten. Wegen einer hohen Konzentration der Tropfen im Dampfstrom werden diese im Reaktor selbst und an den Gummiabfällen intensiv abgesetzt (niedergeschlagen). Infolgedessen wird der Prozess der Verwertung der Abfälle gestört.

Durch die Zuführung des Wasserdampfes und der versprühten schweren Kohlenwasserstofffraktion der Beschickungszone für die Abfälle wird eine große Temperaturdifferenz zwischen dem Wasserdampf mit den Tropfen der schweren Fraktion (die Temperatur beträgt mindestens 160°C) und den kalten Abfällen mit einer Temperatur von ca. 30 bis 40°C sichergestellt. Dies (d. h. die große Temperaturdifferenz) sorgt für hohe Wärmeströme. Infolgedessen wird die Erwärmung der Abfälle beschleunigt, und die Verwertungszeit wird reduziert.

Die Gummiabfälle werden mittels der Schnecke 18 mit einem Verbrauch von 1.600 kg/h befördert. Sie werden sowohl aufgrund des Wärmeaustausches mit der Mantelheizung 13 selbst als auch durch den Wärmeaustausch mit der schweren Kohlenwasserstofffraktion erwärmt, die im Wasserdampf-Medium versprüht ist. Die Tropfen der erwärmten schweren Kohlenwasserstofffraktion fallen an der Oberfläche der Gummiabfälle aus. Sie erwärmen diese intensiv. Außerdem wird die Oberflächenschicht der Abfälle durch die Tropfen der schweren Kohlenwasserstofffraktion aufgelöst. Dies führt zur Beschleunigung der thermischen Zersetzung von Gummi, d. h. zur Reduzierung der Verwertungszeit und demzufolge zur Reduzierung des Energieaufwands für das Verwertungsverfahren.

Bei der Erwärmung der Gummiabfälle im Ofen 16 auf eine Temperatur von 500°C beginnt die Thermolyse von Gummiabfällen. Sie verläuft mit der Freisetzung von gasförmigen Produkten und festem Kohlenstoffrückstand. Die Temperatur im Ofen 16 wird dabei nach den Angaben des Temperatursensors 26 kontrolliert und durch Änderung der Kraftstoffmenge geregelt, die im Brenner 10 verbrannt wird.

Im vorliegenden Fall werden bei der Leistung von 1.600 kg/h Gummiabfällen 800 kg/h der gasförmigen Produkte der thermischen Zersetzung der Abfälle und 800 kg/h von festem Rückstand gebildet. Der feste Rückstand enthält 80 kg Metall (Drahtlitze) und 90 kg Metalloxide (Zink-, Titan-, Eisen-, Aluminium-, Kupferoxide u. a.).

Gasförmige Zersetzungsprodukte der Abfälle vermischen sich mit dem Wasserdampf und der versprühten schweren Kohlenwasserstofffraktion. Als Ergebnis bildet sich im Ofen 16 ein Zweiphasenmedium. Der Druck im Reaktor steigt und wird höher als der Atmosphärendruck.

Im vorliegenden Fall vermischen sich 800 kg/h der gasförmigen Zersetzungsprodukte mit 480 kg/h Wasserdampf und 120 kg/h der gasförmigen Produkte der thermischen Zersetzung der schweren Kohlenwasserstofffraktion. Infolgedessen wird ein Gas-Dampf-Gemisch in einer Menge von 1.400 kg/h gebildet.

Bei der Erwärmung im Ofen 16 erfolgt auch eine teilweise Verdampfung sowie eine thermische Zersetzung der schweren Kohlenwasserstofffraktion unter Bildung von Kohlenwasserstoffen mit einer niedrigen Molekülmasse (wertvolle leichte Kohlenwasserstoffe) und Ruß.

Angenommen, dass sich infolge thermischer Zersetzung von 240 kg/h schwerer Kohlenwasserstofffraktion 120 kg/h gasförmiger Produkte mit einer niedrigeren Molekülmasse bilden als die schwere Ausgangsfraktion. Die restlichen 120 kg/h der schweren Fraktion in Form von Ruß vermischen sich mit dem festen Rückstand der thermischen Zersetzung der gummihaltigen Abfälle.

Infolge der thermischen Zersetzung der im Reaktor versprühten schweren Kohlenwasserstofffraktion bilden sich wertvolle Kohlenwasserstoffe mit einer niedrigeren Molekülmasse. Außerdem bildet sich Ruß mit einem niedrigen Gehalt an Metalloxiden (Asche), weil die schwere Kohlenwasserstoff-Ausgangsfraktion einen niedrigeren Gehalt an Metalloxiden hatte.

Somit erhöht sich die Qualität von Produkten bei der Verwertung gummihaltiger Abfälle.

Die sich bildenden gasförmigen Zersetzungsprodukte der Abfälle, vermengt mit dem Wasserdampf und den Produkten der thermischen Zersetzung der schweren Fraktion, werden in Form eines Gas-Dampf-Gemisches aus dem Ofen 16 über den Durchflussmesser 28 dem Gaswäscher 29 zugeführt. Die Durchflussmenge wird mit dem Hahn 27 so geregelt, dass sie 1.400 kg/h nicht übersteigt. Diese Regelung der Durchflussmenge, nämlich der Menge des Gas-Dampf-Gemisches, das aus dem Reaktor abgeleitet wird, ist notwendig, um den Druck im Reaktor höher als den Atmosphärendruck aufrechtzuerhalten. Dadurch wird die Möglichkeit ausgeschlossen, dass Luft in den Reaktor angesaugt wird und sich im Reaktor ein explosionsgefährliches Gemisch bildet.

Gleichzeitig wird Wasser aus dem Sumpf 30 mittels der Regelpumpe 31 über den Durchflussmesser 32 der Einspritzdüse 33 zugeführt. Dieses Wasser hat sich im Sumpf 30 infolge der Abtrennung (Abschichtung) des Kondensates gebildet.

Der Durchfluss des Gas-Dampf-Gemisches wird mit dem Hahn 27 geregelt. Die Wasserdurchflussmenge wird mit der Pumpe 31 geregelt. Somit wird die Durchflussmenge vom Wasser, das mittels der Einspritzdüse 33 in den Gas-Dampf-Gemischstrom gesprüht wird, in einer Größe von 15% vom Massenstrom (Massendurchsatz) des Gemisches festgelegt.

Im vorliegenden Fall beträgt die Durchflussmenge von Wasser, das in den Gemischstrom gesprüht wird, 210 kg/h bei der Durchflussmenge eines Gas-Dampf-Gemisches von 1.400 kg/h.

Infolge des Wärmeaustausches des Gas-Dampf-Gemisches mit den Wassertropfen erfolgen im Gaswäscher 29 die Erwärmung und die Verdampfung der Wassertropfen. Das Gemisch wird dabei von einer Temperatur von 500°C auf eine Temperatur von 300°C gekühlt. Infolge der Kühlung des Gemisches kommt die Kondensation hochmolekularer Kohlenwasserstoffe mit der Absonderung (Abscheidung) der schweren Fraktion in einer Menge von 220 kg/h zustande. Diese Kondensation verläuft nicht auf der Oberfläche sondern im Volumen. Aus diesem Grund werden die Dämpfe hochmolekularer Kohlenwasserstoffe mit der Bildung von Tropfen kondensiert. An diesen Tropfen setzt sich Kohlenstoff-Feinstaub in einer Menge von 20 kg/h ab. Dieser Kohlenstoff-Feinstaub wird aus dem Ofen 16 ausgetragen. Die sich gebildeten Tropfen fallen im Gaswäscher mit der Bildung eines Gemisches aus, und zwar 220 kg/h flüssiger Phase und 20 kg/h Ruß. Das sich bildende Gemisch wird aus dem Gaswäscher 29 mit einem Durchsatz von 240 kg/h in den Behälter 20 abgeleitet.

Das versprühte Wasser in einer Menge von 210 kg/h verdampft vollständig mit der Bildung von Wasserdampf. Die Abkühltemperatur des Gas-Dampf-Gemisches im Gaswäscher 29 wird dabei nach den Angaben des Temperatursensors 34 kontrolliert und durch Änderung der Durchflussmenge des Sprühwassers geregelt. Die Temperatur wird dabei bei (mit dem Wert von) 300°C aufrechterhalten.

Die Zuführung einer Wassermenge von mehr als 15% des Massenstroms (Massendurchsatz) des Gas-Dampf-Gemisches wird dazu führen, dass ein Teil des Wassers im Gas-Dampf-Gemischstrom nicht verdampfen und zusammen mit der schweren Fraktion und Ruß im Gaswäscher ausfallen wird. Dies wird dazu führen, dass sich im Gaswäscher ein Gemisch aus schwerer Fraktion mit Wasser und Ruß bildet. Dabei wird sich die Notwendigkeit ergeben, ein solches Gemisch zusätzlich zu behandeln, um daraus Wasser abzuscheiden. Dies wird zur Steigerung des Energieaufwands für das Verwertungsverfahren führen.

Das von der schweren Kohlenwasserstofffraktion und dem Kohlenstoff-Feinstaub (Ruß) gereinigte Gas-Dampf-Gemisch wird aus dem Gaswäscher 29 mit einem Durchfluss von 1.370 kg/h in den Kondensator 35 abgeführt. Da im Gaswäscher aus 1.400 kg/h Gas-Dampf-Gemisch 220 kg/h schwere Fraktion und 20 kg/h Ruß abgesondert wurden, dabei aber 210 kg/h Wasserdampf hinzukamen, beträgt die Gas-Dampf-Gemischmenge, die in den Kondensator 35 abgeführt wird, 1.370 kg/h.

Im Kondensator 35 wird das Gas-Dampf-Gemisch auf eine Temperatur von $T_{Kühl}$ = 30°C gekühlt. Dies erfolgt dadurch, dass das Wasser des Kühlturms 36 durch das Kondensatorgehäuse gepumpt wird. Die Temperatur im Kondensator wird dabei mit den Angaben des Temperatursensors 37 kontrolliert.

Damit das Gas-Dampf-Gemisch im Kondensator 35 gekühlt und kondensiert wird, muss durch sein Gehäuse die folgende Menge Umlaufwasser gepumpt werden:

$$M_W = Q_K/(C_p^W \times (T_E - _A)) = (2 \times 1370 \times (300 - 30) + 1000 \times 1250)/(4{,}18 \times (80 - 0)) = 9.520 \text{ kg/h,}$$

worin

$$Q_K = C_{Gem} \times G_{Gem} \times (T_{Gem} - T_{Kühl}) + R_K M_{K,}$$

$C_p^W$ die spezifische Wärmekapazität von Wasser 4,18 kJ/kg°C,
$C_{Gem}$ die spezifische Wärmekapazität des Gas-Dampf-Gemisches 2,0 kJ/kg°C,
$T_E$ die Kühlwassertemperatur am Eintritt in den Kondensator 30 °C,
$T_A$ die Kühlwassertemperatur am Austritt aus dem Kondensator 80 °C,
$T_{Gem}$ die Temperatur des Gas-Dampf-Gemisches am Eintritt in den Kondensator 300 °C,
$T_{Kühl}$ die Abkühltemperatur 30 °C,
$R_K$ die spezifische Kondensationswärme des Gas-Dampf-Gemisches 1.000 kJ/kg,
$M_K$ die Menge des sich bildenden Kondensats 1.250 kg/h und
$G_{Gem}$ der Durchsatz des Gas-Dampf-Gemisches 1.370 kg/h ist.

Durch die Abkühlung im Kondensator 35 wird ein Teil des Gas-Dampf-Gemisches mit der Bildung eines Kondensats in einer Menge von 1.250 kg/h kondensiert. Dabei enthalten 1.250 kg Kondensat 690 kg Wasser und 560 kg flüssiger Kohlenwasserstoffe.

Das Kondensat aus dem Kondensator 35 wird mit einem Durchfluss von 1.250 kg/h in den Sumpf 30 abgelassen. Im Sumpf werden Wasser und flüssige Kohlenwasserstoffe getrennt. Da das Wasser eine größere Dichte aufweist, sammelt es sich im unteren Teil des Sumpfes 30 an. Die flüssigen Kohlenwasserstoffe sammeln sich im oberen Teil des Sumpfes an. Die flüssigen Kohlenwasserstoffe aus dem Sumpf 30 werden mit einem Durchfluss von 560 kg/h über den Hahn 38 in den Sammelbehälter 39 abgelassen.

Aus dem Sumpf 30 wird das Wasser über den Durchflussmesser 40 mit einem Durchfluss von 690 kg/h dem Filter 41 zugeführt. Im Filter 41 wird das Wasser von organischen Verbindungen (Kohlenwasserstoffen) gereinigt. Danach wird das Wasser dem Dampferzeuger 7 zur Erzeugung von Wasserdampf zugeführt. Der Wasserumlauf im geschlossenen Kreislauf ermöglicht es, die Emission von Wasser an die Umgebung auszuschließen. Dadurch können die ökologischen Parameter des Verwertungsverfahrens verbessert werden, d. h. schädliche Emissionen an die Umgebung werden vermindert.

Die nicht kondensierenden Kohlenwasserstoffe aus dem Kondensator 35 werden mittels der Regelpumpe 42 mit einem Durchfluss von 120 kg/h dem Brenner 10 zugeführt und verbrannt.

Da der Wärmewert (die Verbrennungswärme) der nicht kondensierenden Kohlenwasserstoffe 30.000 kJ/kg beträgt, entspricht die Verbrennung von 120 kg/h Kohlenwasserstoffen der Verbrennung von 90 kg/h flüssigen Kraftstoffs mit einem Wärmewert von 40.000 kJ/kg. Deshalb wird der Verbrauch von flüssigem Kraftstoff, der dem Brenner 10 aus dem Behälter 11 zugeführt wird, um 90 kg/h reduziert, d h. bis zu einer Größe von 150 kg/h.

Die Verbrennung nicht kondensierender Gase ermöglicht es, die Emission von diesen an die Umgebung zu vermeiden. Auch wird der Verbrauch von zusätzlichem Kraftstoff für das Verfahren zur Verwertung gummihaltiger Abfälle reduziert.

Die flüssigen Kohlenwasserstoffe aus dem Sammelbehälter 39 werden anhand der Regelpumpe 43 über den Durchflussmesser 44 mit einem Durchfluss von 150 kg/h dem Brenner 10 zugeführt und verbrannt. Dabei wird die Zuführung von Kraftstoff aus dem Behälter 11 vollständig eingestellt.

Durch die Verwendung der flüssigen Kohlenwasserstoffe als Kraftstoff kann der Verbrauch von zusätzlichem Kraftstoff ausgeschlossen werden. Die flüssigen Kohlenwasserstoffe werden bei der Verwertung der Abfälle gewonnen.

Der feste Rückstand aus dem Ofen 16 wird durch die Entleerungsvorrichtung (den Kanal) 19 mit Hilfe der Schleusen-Aufgabevorrichtung (des Schleusenspeisers) 45 mit einem Verbrauch von 800 kg/h in die Kühlvorrichtung 46 abgeführt. Die Kühlvorrichtung 46 stellt einen Schneckenförderer mit der Mantelkühlung 47 dar. Der Motor 48 wird angelassen, und die Schnecke 49 wird in Drehung versetzt. Die Schnecke 49 befördert den festen Rückstand von der Beschickung zur Entleerungsvorrichtung (zum Kanal). Gleichzeitig wird das Kühlwasser des Kühlturms 36 durch die Mantelkühlung 47 der Kühlvorrichtung 46 gepumpt. Bei der Bewegung durch die Kühlvorrichtung wird der feste Kohlenstoffrückstand bis auf eine Temperatur von max. 100°C gekühlt. Die Temperatur wird anhand der Angaben des Temperatursensors 50 kontrolliert. Der gekühlte feste Rückstand aus der Kühlvorrichtung 46 wird mit einem Verbrauch von 800 kg/h in den Magnetscheider 51 entladen. Im Magnetscheider 51 werden aus dem festen Kohlenstoff-Rückstand 80 kg/h Metall abgeschieden. Aus dem Magnetscheider (Separator) wird Metall mit einem Verbrauch von 80 kg/h in den Speicher 52 abgeführt. Der vom Metall gereinigte feste Rückstand wird mit einem Verbrauch von 720 kg/h dem dielektrischen Abscheider 53 zugeführt. Im dielektrischen Abscheider 53 werden aus dem festen Rückstand Nichtleiter (Oxide) abgeschieden, darunter Zinkoxid in einer Menge von 45 kg/h. Aus dem dielektrischen Abscheider 53 wird Zinkoxid, gemischt mit anderen Oxiden (Silicium-, Calcium-, Titanoxide usw.), in einer Menge von 45 kg/h in den Speicher 54 entladen. Der Gehalt an Zinkoxid in diesem Gemisch erreicht 30 bis 40% je nach dem Typ der gummihaltigen Abfälle. Deshalb stellt dieses Gemisch einen hochwertigen Rohstoff zur Gewinnung von Zinkoxid dar.

Der gereinigte feste Rückstand aus dem dielektrischen Abscheider 53 wird mit einem Verbrauch von 675 kg/h in den Speicher 55 entladen. Infolge der Abscheidung aus dem festen Rückstand des Metalls sowie der Metalloxide erhöht sich der Kohlenstoffgehalt. Bei Vorhandensein von 65 Gew.-% Kohlenstoff in 800 kg von nicht gereinigtem (nicht behandeltem) festem Rückstand wird der Kohlenstoffgehalt nach der Reinigung 77 Gew.-% betragen. Aus diesem Grund stellt der auf solche Weise behandelte feste Rückstand einen dem Industrieruß analogen Stoff dar.

Wegen der konsequenten Magnet- und dielektrischen Trennung von festem Rückstand werden Qualitäts-Industrieruß und ein hochwertiger Rohstoff zur Gewinnung von Zinkoxid hergestellt.

Gewerbliche Anwendbarkeit

Das vorliegende Verfahren zur Verwertung von gummihaltigen Abfällen unterscheidet sich von den bekannten Verfahren durch seine verbesserten Parameter in Bezug auf den Energieaufwand, die Emissionen sowie die Qualität der zu gewinnenden Produkte.

**Patentansprüche**

1. Verfahren zur Verwertung von gummihaltigen Abfällen, umfassend die Vorbehandlung der Abfälle, die thermische Zersetzung der Abfälle im Ofen, die Trennung der Abbauprodukte in Gas-Dampf-Gemisch und festen Rückstand, die Abscheidung der schweren Kohlenwasserstofffraktion aus dem Gas-Dampf-Gemisch,
**dadurch gekennzeichnet,**

   **dass** die Abfälle bei der Vorbehandlung mit Wasserdampf beblasen werden,
   **dass** die thermische Zersetzung in der versprühten schweren Kohlenwasserstofffraktion und im überhitzten Wasserdampf bei deren Massenverhältnis von (0,1 - 0,5) Kohlenwasserstofffraktion : 1 Wasserdampf durchgeführt wird, wobei ein Gas-Dampf-Gemisch und ein fester Rückstand gebildet wird,
   **dass** die Abscheidung der schweren Kohlenwasserstofffraktion aus dem Gas-Dampf-Gemisch mit Wasser erfolgt, wobei das Wasser im Gas-Dampf-Gemischstrom in einer Menge von 5 bis 15% vom Massenstrom (Massendurchsatz) des Gemisches gesprüht wird, und

**dass** aus dem festen Rückstand Metall durch Magnettrennung abgeschieden wird, woraufhin ein zinkoxidhaltiges Produkt durch dielektrische Trennung abgeschieden wird.

## Claims

1. A method for utilization of rubber containing waste, comprising the pretreatment of the waste, the thermal decomposition of the waste in the furnace, the separation of the decomposition products into a gas-steam mixture and solid residue, the separation of the heavy hydrocarbon fraction from the gas-steam mixture, **characterized in**

   **that** the waste is blown with water vapor during the pretreatment,
   **that** the thermal decomposition is carried out in the atomized heavy hydrocarbon fraction and in the superheated water vapor with their mass ratio (0.1 - 0.5) hydrocarbon fraction : 1 water vapor, wherein a gas-steam mixture and a solid residue is formed,
   **that** the separation of the heavy hydrocarbon fraction from the gas-steam mixture is carried out with water, wherein the water in the gas-steam mixed flow is sprayed in an amount of 5 to 15% mass flow (mass flow rate) of the mixture, and
   **that** metal is separated from the solid residue through magnetic separation, whereupon a zinc-oxide containing product is separated by dielectric separation.

## Revendications

1. Procédé de valorisation de déchets contenant du caoutchouc, comprenant le pré-traitement des déchets, la décomposition thermique des déchets dans un four, la séparation des produits de la décomposition en un mélange gaz-vapeur et un résidu solide, le dépôt de la fraction lourde d'hydrocarbures à partir du mélange gaz-vapeur, **caractérisé en ce que**

   les déchets sont soufflés, lors du pré-traitement, avec de la vapeur d'eau,
   la décomposition thermique dans la fraction lourde d'hydrocarbures pulvérisée et dans la vapeur d'eau surchauffée est effectuée avec un rapport de masse de (0,1 - 0,5) de fraction lourde d'hydrocarbures : 1 vapeur d'eau, dans lequel un mélange gaz-vapeur et un résidu solide sont formés,
   le dépôt de la fraction lourde d'hydrocarbures à partir du mélange gaz-vapeur a lieu avec de l'eau, dans lequel l'eau est pulvérisée dans le flux de mélange gaz-vapeur avec une quantité de 5 à 15 % du flux massique (débit massique) du mélange et
   du résidu solide, est extrait un métal par séparation magnétique, un produit contenant de l'oxyde de zinc étant extrait par séparation diélectrique.

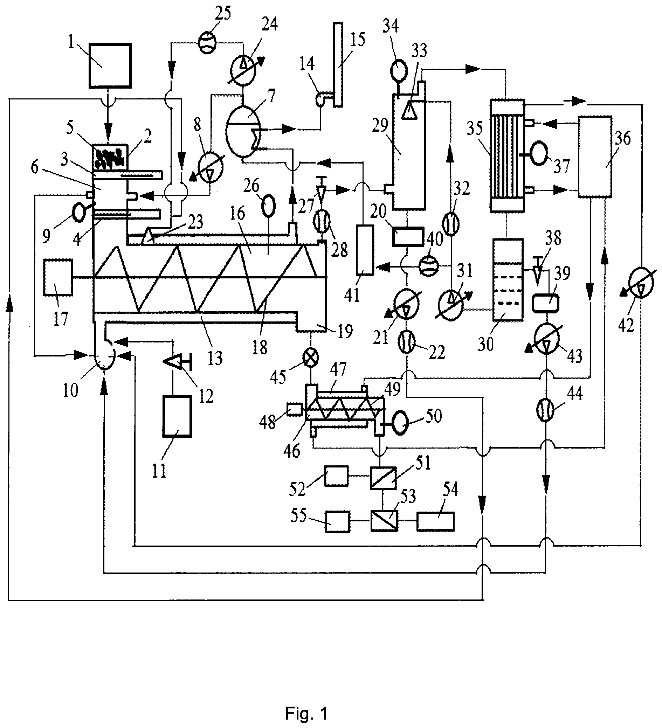

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2245247
- US 20140294686 A1
- RU 2076501
- RU 2460743
- RU 2291168

**In der Beschreibung aufgeführte Nicht-Patentliteratur**

- Aus dem Englischen unter der Redaktion. **B.S. PETUCHOW ; W.K. SCHIKOW.** Wärmetauscher-Handbuch: In zwei Bänden. 1987, vol. 1, 77